# EUROPEAN PATENT APPLICATION

(11) **EP 3 054 642 A1**
(43) Date of publication of application: **10.08.2016**
(21) Application number: 13896393.9
(22) Date of filing: 31.10.2013
(51) Int. Cl.: H04L 29/06

(54) **DATA PROCESSING METHOD, DEVICE AND SYSTEM**

(71) Applicant: Huawei Technologies Co., Ltd., Longgang District Shenzhen, Guangdong 518129 (CN)
(72) Inventor: HU, Xiang, Shenzhen Guangdong 518129 (CN); HU, Yusheng, Shenzhen Guangdong 518129 (CN)
(74) Representative: Epping - Hermann - Fischer
(86) International application number: PCT/CN2013/086342
(87) International publication number: WO 2015/062036

(57) **Abstract**

Embodiments of the present invention provide a data processing method, device, and system, which relate to the communications field and can perform processing according to requirements of data services of different user equipments, improve a processing effect, and enhance user experience. The method includes: obtaining, by an ADN device, an application delivery policy, and then performing, according to the application delivery policy, service processing for a data service currently running in a first user equipment. The data processing method, device, and system provided by the embodiments of the present invention are used to perform service processing for a currently running data service of a first user whose optimization is supported by the ADN device.

## Description

### TECHNICAL FIELD

The present invention relates to the communications field, and in particular, to a data processing method, device, and system.

### BACKGROUND

With fast development of mobile broadband, various APPs (Applications, applications) also grow explosively, which brings heavy pressure to network bandwidth and user experience. By means of an ADN device (Application Delivery Networking, application delivery networking), multiple application payment functions may be implemented, including multiple types of processing, such as application acceleration, security, and management. The ADN device uses a corresponding network optimization and acceleration device to ensure that service applications of users can be delivered to internal employees and external served groups quickly, securely, and reliably.

In the prior art, firstly, a user initiates an activation request message by using a user equipment, so that the user is activated in a mobile network; secondly, an ADN device network may obtain basic attribute information such as a user ID (IDentity, identity), Qos (Quality Of Service, quality of service), and an APN (Access Point Name, access point) from a gateway device by using a Remote Authentication Dial In User Service message; thirdly, the gateway device returns an activation success response message to the user equipment; and finally, the ADN device selects a policy of a user granularity according to the known basic attribute information such as the user ID, Qos, and APN, and enables different application payment functions in the ADN device network for different users by performing proper planning.

Because the ADN device can obtain the basic attribute information such as the user ID, Qos, and APN only from the gateway device, and cannot obtain subscription policy information from a policy server, the ADN device cannot provide subscription policies such as differentiated load balancing, application acceleration, network security, and link management for each user according to specific services of each user; consequently, accurate processing of service optimization provided by the ADN device for the users cannot be performed according to requirements of data services of different users, and a processing effect is poor.

### SUMMARY

Embodiments of the present invention provide a data processing method, device, and system, which can perform more accurate processing according to requirements of data services of different user equipments, thereby improving a processing effect and enhancing user experience.

To achieve the foregoing objectives, the embodiments of the present invention adopt the following technical solutions:
A first aspect provides a data processing method, including:
   obtaining, by an application delivery networking ADN device, an application delivery policy, where the application delivery policy includes at least one data service of a first user whose optimization is supported by the ADN device and a service parameter of the data service of the first user whose optimization is supported by the ADN device; and
   performing, by the ADN device according to the application delivery policy, service processing for a data service currently running in the first user equipment, where the first user equipment is a user equipment corresponding to the first user.

With reference to the first aspect, in a first possible implementation manner,
the obtaining, by an ADN device, an application delivery policy includes:
   sending, by the ADN device, policy request information to the policy server, so that the policy server determines the application delivery policy according to the policy request information, where the policy request information includes a user identity of the first user equipment and application payment functions supported by the ADN device, where the user identity of the first user equipment indicates that the first user equipment corresponds to the first user; and
   receiving, by the ADN device, the application delivery policy sent by the policy server.

With reference to the first aspect, in a second possible implementation manner,
the obtaining, by an ADN device, an application delivery policy includes:
   obtaining, by the ADN device, subscription policy information, where the subscription policy information is generated by a policy server, and the subscription policy information includes data services subscribed to by the first user and service parameters of the data services subscribed to by the first user; and
   determining, by the ADN device, the application delivery policy according to the subscription policy information and application payment functions supported by the ADN device.

With reference to the second possible implementation manner, in a third possible implementation manner,
the obtaining, by the ADN device, subscription policy information includes:
   receiving, by the ADN device, the subscription policy information sent by the policy server; or
   receiving, by the ADN device, the subscription policy information forwarded by a gateway device, where the subscription policy information is generated by the policy server and sent to the gateway device, and the gateway device is any one of a gateway general packet radio service support node GGSN network element, a packet data network gateway PGW network element, and a packet data serving node PDSN network element.

With reference to the second to third possible implementation manner, in a fourth possible implementation manner, the determining, by the ADN device, the application delivery policy according to the subscription policy information and application payment functions supported by the ADN device includes:
determining, by the ADN device according to the application payment functions supported by the ADN device, data services whose optimization is supported by the ADN device;
using, by the ADN device, a same data service in the data services subscribed to by the first user and the data services whose optimization is supported by the ADN device, as the data service of the first user whose optimization is supported by the ADN device; and
obtaining, by the ADN device, the service parameter of the data service of the first user whose optimization is supported by the ADN device, from the service parameters of the data services subscribed to by the first user.

With reference to the first possible implementation manner, in a fifth possible implementation manner, the policy server is any one of a policy and charging rules function PCRF network element, an online charging system OCS network element, and a Remote Authentication Dial In User Service server;
the sending, by the ADN device, policy request information to the policy server includes:
   sending, by the ADN device, a policy request message to the policy server, where the policy request message carries the policy request information; or
   sending, by the ADN device, a first request message to the policy server, where the first request message carries the policy request information; and
   the receiving, by the ADN device, the application delivery policy sent by the policy server includes:
      receiving, by the ADN device, a policy response message sent by the policy server, where the policy response message carries the application delivery policy; or
      receiving, by the ADN device, a first response message sent by the policy server, where the first response message carries the application delivery policy.
      With reference to the third possible implementation manner, in a sixth possible implementation manner, the policy server is any one of a PCRF network element, an OCS network element, and a Remote Authentication Dial In User Service server; and
      the receiving, by the ADN device, the subscription policy information sent by the policy server includes:
         receiving, by the ADN device, a subscription policy request message sent by the policy server, where the subscription policy request message carries the subscription policy information; or
         receiving, by the ADN device, a second request message sent by the policy server, where the second request message carries the subscription policy information.
         With reference to the third possible implementation manner, in a seventh possible implementation manner, the policy server is any one of a PCRF network element, an OCS network element, and a Remote Authentication Dial In User Service server; and
         the receiving, by the ADN device, the subscription policy information forwarded by a gateway device includes:
            receiving, by the ADN device, a subscription policy message sent by the gateway device, where the subscription policy message carries the subscription policy information.

A second aspect provides a data processing method, including:
receiving, by a policy server, policy request information sent by an ADN device, where the policy request information includes a user identity of a first user equipment and application payment functions supported by the ADN device, where the user identity of the first user equipment indicates that the first user equipment corresponds to the first user;
determining, by the policy server, an application delivery policy according to the policy request information, where the application delivery policy includes at least one data service of the first user whose optimization is supported by the ADN device and a service parameter of the data service of the first user whose optimization is supported by the ADN device; and
sending, by the policy server, the application delivery policy to the ADN device, so that the ADN device performs, according to the application delivery policy, service processing for a data service currently running in the first user equipment.

With reference to the second aspect, in a first possible implementation manner, the determining, by the policy server, an application delivery policy according to the policy request information includes:
obtaining, by the policy server, subscription policy information from a policy database of the policy server according to the user identity of the first user equipment, where the subscription policy information includes data services subscribed to by the first user and service parameters of the data services subscribed to by the first user; and
determining, by the policy server, the application delivery policy according to the subscription policy information and the application payment functions supported by the ADN device.

With reference to the first possible implementation manner, in a second possible implementation manner,
the determining, by the policy server, the application delivery policy according to the subscription policy information and the application payment functions supported by the ADN device includes:
   determining, by the policy server according to the application payment functions supported by the ADN device, data services whose optimization is supported by the ADN device;
   using, by the policy server, a same data service in the data services subscribed to by the first user and the data services whose optimization is supported by the ADN device, as the data service of the first user whose optimization is supported by the ADN device; and
   obtaining, by the policy server, the service parameter of the data service of the first user whose optimization is supported by the ADN device, from the service parameters of the data services subscribed to by the first user.

With reference to the second aspect, or the first to second possible implementation manner, in a third possible implementation manner, the policy server is any one of a PCRF network element, an OCS network element, and a Remote Authentication Dial In User Service server;
the receiving, by a policy server, policy request information sent by an ADN device includes:
   receiving, by the policy server, a policy request message sent by the ADN device, where the policy request message carries the policy request information; or
   receiving, by the policy server, a first request message sent by the ADN device, where the first request message carries the policy request information; and
   the sending, by the policy server, the application delivery policy to the ADN device includes:
      sending, by the policy server, a policy response message to the ADN device, where the policy response message carries the application delivery policy; or
      sending, by the policy server, a first response message to the ADN device, where the first response message carries the application delivery policy.

A third aspect provides a data processing method, including:
generating, by a policy server, subscription policy information, where the subscription policy information includes data services subscribed to by a first user equipment and service parameters of the data services subscribed to by the first user; and
sending, by the policy server, the subscription policy information to an ADN device, so that the ADN device determines an application delivery policy according to the subscription policy information and application payment functions supported by the ADN device; or
sending, by the policy server, the subscription policy information to a gateway device, so that the gateway device forwards the subscription policy information to the ADN device, so that the ADN device determines the application delivery policy according to the subscription policy information and the application payment functions supported by the ADN device.

With reference to the third aspect, in a first possible implementation manner,
the sending, by the policy server, the subscription policy information to an ADN device includes:
   sending, by the policy server, a subscription policy request message to the ADN device, where the subscription policy request message carries the subscription policy information; or
   sending, by the policy server, a second request message to the ADN device, where the second request message carries the subscription policy information.

With reference to the third aspect, in a second possible implementation manner,
the sending, by the policy server, the subscription policy information to a gateway device includes:
   sending, by the policy server, a subscription policy response message to the gateway device, where the subscription policy response message carries the subscription policy information.

A fourth aspect provides a data processing method, including:
receiving, by a gateway device, subscription policy information sent by a policy server; and
forwarding, by the gateway device, the subscription policy information to an ADN device, so that the ADN device determines an application delivery policy according to the subscription policy information and application payment functions supported by the ADN device.

With reference to the fourth aspect, in a first possible implementation manner,
the receiving, by a gateway device, subscription policy information sent by a policy server includes:
   receiving, by the gateway device, a subscription policy response message sent by the policy server, where the subscription policy response message carries the subscription policy information.

With reference to the fourth aspect, in a second possible implementation manner,
the forwarding, by the gateway device, the subscription policy information to an ADN device includes:
   sending, by the gateway device, a subscription policy message to the ADN device, where the subscription policy message carries the subscription policy information.

A fifth aspect provides an ADN device, including:
a first obtaining unit, configured to obtain an application delivery policy, where the application delivery policy includes at least one data service of a first user whose optimization is supported by the ADN device and a service parameter of the data service of the first user whose optimization is supported by the ADN device; and
a first processing unit, configured to perform, according to the application delivery policy, service processing for a data service currently running in the first user equipment, where the first user equipment is a user equipment corresponding to the first user.

With reference to the fifth aspect, in a first possible implementation manner,
the first obtaining unit includes:
   a first sending subunit, configured to send policy request information to the policy server, so that the policy server determines the application delivery policy according to the policy request information, where the policy request information includes a user identity of the first user equipment and application payment functions supported by the ADN device, where the user identity of the first user equipment indicates that the first user equipment corresponds to the first user; and
   a first receiving subunit, configured to receive the application delivery policy sent by the policy server.

With reference to the fifth aspect, in a second possible implementation manner,
the first obtaining unit further includes:
   a first obtaining subunit, configured to obtain subscription policy information, where the subscription policy information is generated by a policy server, and the subscription policy information includes data services subscribed to by the first user and service parameters of the data services subscribed to by the first user; and
   a first processing subunit, configured to determine the application delivery policy according to the subscription policy information and application payment functions supported by the ADN device.

With reference to the second possible implementation manner, in a third possible implementation manner,
the first obtaining subunit is specifically configured to:
receive the subscription policy information sent by the policy server; or
receive the subscription policy information forwarded by a gateway device, where the subscription policy information is generated by the policy server and sent to the gateway device, and the gateway device is any one of a gateway general packet radio service support node GGSN network element, a packet data network gateway PGW network element, and a packet data serving node PDSN network element.

With reference to the second to third possible implementation manner, in a fourth possible implementation manner,
the first processing subunit is specifically configured to:
   determine, according to the application payment functions supported by the ADN device, data services whose optimization is supported by the ADN device;
   use a same data service in the data services subscribed to by the first user and the data services whose optimization is supported by the ADN device, as the data service of the first user whose optimization is supported by the ADN device; and
   obtain the service parameter of the data service of the first user whose optimization is supported by the ADN device, from the service parameters of the data services subscribed to by the first user.

With reference to the first possible implementation manner, in a fifth possible implementation manner, the policy server is any one of a policy and charging rules function PCRF network element, an online charging system OCS network element, and a Remote Authentication Dial In User Service server;
the first sending subunit is specifically configured to:
   send a policy request message to the policy server, where the policy request message carries the policy request information; or
   send a first request message to the policy server, where the first request message carries the policy request information; and
   the first receiving subunit is specifically configured to:
      receive a policy response message sent by the policy server, where the policy response message carries the application delivery policy; or
      receive a first response message sent by the policy server, where the first response message carries the application delivery policy.

With reference to the third possible implementation manner, in a sixth possible implementation manner, the policy server is any one of a PCRF network element, an OCS network element, and a Remote Authentication Dial In User Service server; and
the first obtaining subunit is specifically configured to:
   receive a subscription policy request message sent by the policy server, where the subscription policy request message carries the subscription policy information; or
   receive a second request message sent by the policy server, where the second request message carries the subscription policy information.

With reference to the third possible implementation manner, in a seventh possible implementation manner, the policy server is any one of a PCRF network element, an OCS network element, and a Remote Authentication Dial In User Service server; and
the first obtaining subunit is specifically configured to:
receive a subscription policy message sent by the gateway device, where the subscription policy message carries the subscription policy information.

A sixth aspect provides a policy server, including:
a first receiving unit, configured to receive policy request information sent by an ADN device, where the policy request information includes a user identity of a first user equipment and application payment functions supported by the ADN device, where the user identity of the first user equipment indicates that the first user equipment corresponds to the first user;
a second processing unit, configured to determine an application delivery policy according to the policy request information, where the application delivery policy includes at least one data service of the first user whose optimization is supported by the ADN device and a service parameter of the data service of the first user whose optimization is supported by the ADN device; and
a first sending unit, configured to send the application delivery policy to the ADN device, so that the ADN device performs, according to the application delivery policy, service processing for a data service currently running in the first user equipment.

With reference to the sixth aspect, in a first possible implementation manner, the second processing unit includes:
a querying subunit, configured to obtain subscription policy information from a policy database of the policy server according to the user identity of the first user equipment, where the subscription policy information includes data services subscribed to by the first user and service parameters of the data services subscribed to by the first user; and
a determining subunit, configured to determine the application delivery policy according to the subscription policy information and the application payment functions supported by the ADN device.

With reference to the first possible implementation manner, in a second possible implementation manner, the determining subunit is specifically configured to:
determine, according to the application payment functions supported by the ADN device, data services whose optimization is supported by the ADN device;
use a same data service in the data services subscribed to by the first user and the data services whose optimization is supported by the ADN device, as the data service of the first user whose optimization is supported by the ADN device; and
obtain the service parameter of the data service of the first user whose optimization is supported by the ADN device, from the service parameters of the data services subscribed to by the first user.

With reference to the sixth aspect, or the first to second possible implementation manner, in a third possible implementation manner, the policy server is any one of a PCRF network element, an OCS network element, and a Remote Authentication Dial In User Service server;
the first receiving unit is specifically configured to:
receive a policy request message sent by the ADN device, where the policy request message carries the policy request information; or
receive a first request message sent by the ADN device, where the first request message carries the policy request information; and
the first sending unit is specifically configured to:
   send a policy response message to the ADN device, where the policy response message carries the application delivery policy; or
   send a first response message to the ADN device, where the first response message carries the application delivery policy.

A seventh aspect provides a policy server, including:
a generating unit, configured to generate subscription policy information, where the subscription policy information includes data services subscribed to by a first user equipment and service parameters of the data services subscribed to by the first user; and
a second sending unit, configured to send the subscription policy information to an ADN device, so that the ADN device determines an application delivery policy according to the subscription policy information and application payment functions supported by the ADN device, or send the subscription policy information to a gateway device, so that the gateway device forwards the subscription policy information to the ADN device, so that the ADN device determines the application delivery policy according to the subscription policy information and the application payment functions supported by the ADN device.

With reference to the seventh aspect, in a first possible implementation manner,
the second sending unit is specifically configured to:
   send a subscription policy request message to the ADN device, where the subscription policy request message carries the subscription policy information; or
   send a second request message to the ADN device, where the second request message carries the subscription policy information.

With reference to the seventh aspect, in a second possible implementation manner,
the second sending unit is further configured to:
   send a subscription policy response message to the gateway device, where the subscription policy response message carries the subscription policy information.

An eighth aspect provides a gateway device, including:
a third receiving unit, configured to receive subscription policy information sent by a policy server; and
a third sending unit, configured to forward the subscription policy information to an ADN device, so that the ADN device determines an application delivery policy according to the subscription policy information and application payment functions supported by the ADN device.

With reference to the eighth aspect, in a first possible implementation manner,
the third receiving unit is specifically configured to receive a subscription policy response message sent by the policy server, where the subscription policy response message carries the subscription policy information.

With reference to the eighth aspect, in a second possible implementation manner,
the third sending unit is specifically configured to send a subscription policy message to the ADN device, where the subscription policy message carries the subscription policy information.

A ninth aspect provides a communication system, including:
any one of the foregoing ADN devices;
any one of the foregoing policy servers; and
any one of the foregoing gateway devices.

A tenth aspect provides an ADN device, including:
a processor, configured to obtain an application delivery policy, where the application delivery policy includes at least one data service of a first user whose optimization is supported by the ADN device and a service parameter of the data service of the first user whose optimization is supported by the ADN device, where
the processor is further configured to perform, according to the application delivery policy, service processing for a data service currently running in the first user equipment, where the first user equipment is a user equipment corresponding to the first user.

With reference to the tenth aspect, in a first possible implementation manner, the ADN device further includes:
a first transmitter, configured to send policy request information to the policy server, so that the policy server determines the application delivery policy according to the policy request information, where the policy request information includes a user identity of the first user equipment and application payment functions supported by the ADN device, where the user identity of the first user equipment indicates that the first user equipment corresponds to the first user; and
a first receiver, configured to receive the application delivery policy sent by the policy server.

With reference to the tenth aspect, in a second possible implementation manner,
the processor is further configured to: obtain subscription policy information, where the subscription policy information is generated by a policy server, and the subscription policy information includes data services subscribed to by the first user and service parameters of the data services subscribed to by the first user; and
determine the application delivery policy according to the subscription policy information and application payment functions supported by the ADN device.

With reference to the second possible implementation manner, in a third possible implementation manner, the ADN device further includes:
a second receiver, configured to:
   receive the subscription policy information sent by the policy server; or
   receive the subscription policy information forwarded by a gateway device, where the subscription policy information is generated by the policy server and sent to the gateway device, and the gateway device is any one of a gateway general packet radio service support node GGSN network element, a packet data network gateway PGW network element, and a packet data serving node PDSN network element.

With reference to the second to third possible implementation manner, in a fourth possible implementation manner,
the processor is specifically configured to:
   determine, according to the application payment functions supported by the ADN device, data services whose optimization is supported by the ADN device;
   use a same data service in the data services subscribed to by the first user and the data services whose optimization is supported by the ADN device, as the data service of the first user whose optimization is supported by the ADN device; and
   obtain the service parameter of the data service of the first user whose optimization is supported by the ADN device, from the service parameters of the data services subscribed to by the first user.

With reference to an eleventh aspect, in a fifth possible implementation manner, the policy server is any one of a policy and charging rules function PCRF network element, an online charging system OCS network element, and a Remote Authentication Dial In User Service server;
the first transmitter is specifically configured to:
   send a policy request message to the policy server, where the policy request message carries the policy request information; or
   send a first request message to the policy server, where the first request message carries the policy request information; and
   the first receiver is specifically configured to:
      receive a policy response message sent by the policy server, where the policy response message carries the application delivery policy; or
      receive a first response message sent by the policy server, where the first response message carries the application delivery policy.

With reference to the third possible implementation manner, in a sixth possible implementation manner, the policy server is any one of a PCRF network element, an OCS network element, and a Remote Authentication Dial In User Service server; and
the second receiver is specifically configured to:
   receive a subscription policy request message sent by the policy server, where the subscription policy request message carries the subscription policy information; or
   receive a second request message sent by the policy server, where the second request message carries the subscription policy information.

With reference to the third possible implementation manner, in a seventh possible implementation manner, the policy server is any one of a PCRF network element, an OCS network element, and a Remote Authentication Dial In User Service server; and
the second receiver is specifically configured to:
   receive a subscription policy message sent by the gateway device, where the subscription policy message carries the subscription policy information.

An eleventh aspect provides a policy server, including:
a receiver, configured to receive policy request information sent by an ADN device, where the policy request information includes a user identity of a first user equipment and application payment functions supported by the ADN device, where the user identity of the first user equipment indicates that the first user equipment corresponds to the first user;
a processor, configured to determine an application delivery policy according to the policy request information, where the application delivery policy includes at least one data service of the first user whose optimization is supported by the ADN device and a service parameter of the data service of the first user whose optimization is supported by the ADN device; and
a transmitter, configured to send the application delivery policy to the ADN device, so that the ADN device performs, according to the application delivery policy, service processing for a data service currently running in the first user equipment.

With reference to the eleventh aspect, in a first possible implementation manner, the processor is configured to:
obtain subscription policy information from a policy database of the policy server according to the user identity of the first user equipment, where the subscription policy information includes data services subscribed to by the first user and service parameters of the data services subscribed to by the first user; and
determine the application delivery policy according to the subscription policy information and the application payment functions supported by the ADN device.

With reference to the first possible implementation manner, in a second possible implementation manner,
the processor is specifically configured to:
   determine, according to the application payment functions supported by the ADN device, data services whose optimization is supported by the ADN device;
   use a same data service in the data services subscribed to by the first user and the data services whose optimization is supported by the ADN device, as the data service of the first user whose optimization is supported by the ADN device; and
   obtain the service parameter of the data service of the first user whose optimization is supported by the ADN device, from the service parameters of the data services subscribed to by the first user.

With reference to the eleventh aspect, and the first possible implementation manner and second possible implementation manner, the policy server is any one of a PCRF network element, an OCS network element, and a Remote Authentication Dial In User Service server;
the receiver is configured to:
   receive a policy request message sent by the ADN device, where the policy request message carries the policy request information; or
   receive a first request message sent by the ADN device, where the first request message carries the policy request information; and
   the transmitter is specifically configured to:
      send a policy response message to the ADN device, where the policy response message carries the application delivery policy; or
      send a first response message to the ADN device, where the first response message carries the application delivery policy.

A twelfth aspect provides a policy server, including:
a processor, configured to generate subscription policy information, where the subscription policy information includes data services subscribed to by a first user equipment and service parameters of the data services subscribed to by the first user; and
a transmitter, configured to send the subscription policy information to an ADN device, so that the ADN device determines an application delivery policy according to the subscription policy information and application payment functions supported by the ADN device, or send the subscription policy information to a gateway device, so that the gateway device forwards the subscription policy information to the ADN device, so that the ADN device determines the application delivery policy according to the subscription policy information and the application payment functions supported by the ADN device.

With reference to the twelfth aspect, in a first possible implementation manner,
the transmitter is specifically configured to:
   send a subscription policy request message to the ADN device, where the subscription policy request message carries the subscription policy information; or
   send a second request message to the ADN device, where the second request message carries the subscription policy information.

With reference to the twelfth aspect, in a second possible implementation manner,
the transmitter is further configured to:
   send a subscription policy response message to the gateway device, where the subscription policy response message carries the subscription policy information.

A thirteenth aspect provides a gateway device, including:
a receiver, configured to receive subscription policy information sent by a policy server; and
a transmitter, configured to forward the subscription policy information to an ADN device, so that the ADN device determines an application delivery policy according to the subscription policy information and application payment functions supported by the ADN device.

With reference to the thirteenth aspect, in a first possible implementation manner,
the receiver is specifically configured to:
   receive a subscription policy response message sent by the policy server, where the subscription policy response message carries the subscription policy information.

With reference to the thirteenth aspect, in a second possible implementation manner,
the transmitter is specifically configured to:
   send a subscription policy message to the ADN device, where the subscription policy message carries the subscription policy information.

A fourteenth aspect provides a communication system, including:
any one of the foregoing policy servers; and
any one of the foregoing gateway devices.

The embodiments of the present invention provide a data processing method, device, and system. The method includes: obtaining, by an ADN device, an application delivery policy, and then performing, according to the application delivery policy, service processing for a data service currently running in a first user equipment. The data processing method, device, and system provided by the embodiments of the present invention are used to perform service processing for a currently running data service of a first user whose optimization is supported by the ADN device. In this way, by obtaining the application delivery policy and according to the data service of the first user whose optimization is supported by the ADN device and a service parameter of the data service of the first user whose optimization is supported by the ADN device in the application delivery policy, the ADN device performs service processing for the data service currently running in the first user equipment. Therefore, the ADN device can perform optimization according to requirements of data services of different user equipments, thereby improving a processing effect and enhancing user experience.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a data processing method applied to an ADN device according to an embodiment of the present invention;
FIG. 2 is a flowchart of a data processing method applied to a policy server according to an embodiment of the present invention;
FIG. 3 is a flowchart of another data processing method applied to a policy server according to an embodiment of the present invention;
FIG. 4 is a flowchart of a data processing method applied to a gateway device according to an embodiment of the present invention;
FIG. 5 is a flowchart of a data processing method according to an embodiment of the present invention;
FIG. 6 is a flowchart of another data processing method according to an embodiment of the present invention;
FIG. 7 is a flowchart of still another data processing method according to an embodiment of the present invention;
FIG. 8 is a schematic structural diagram of an ADN device according to an embodiment of the present invention;
FIG. 9 is a schematic structural diagram of a first obtaining unit of an ADN device according to an embodiment of the present invention;
FIG. 10 is a schematic structural diagram of a first obtaining unit of another ADN device according to an embodiment of the present invention;
FIG. 11 is a schematic structural diagram of a policy server according to an embodiment of the present invention;
FIG. 12 is a schematic structural diagram of a second processing unit of a policy server according to an embodiment of the present invention;
FIG. 13 is a schematic structural diagram of another policy server according to an embodiment of the present invention;
FIG. 14 is a schematic structural diagram of a gateway device according to an embodiment of the present invention;
FIG. 15 is a schematic structural diagram of another ADN device according to an embodiment of the present invention;
FIG. 16 is a schematic structural diagram of still another ADN device according to an embodiment of the present invention;
FIG. 17 is a schematic structural diagram of yet another ADN device according to an embodiment of the present invention;
FIG. 18 is a schematic structural diagram of another policy server according to an embodiment of the present invention;
FIG. 19 is a schematic structural diagram of still another policy server according to an embodiment of the present invention;
FIG. 20 is a schematic structural diagram of another gateway device according to an embodiment of the present invention;
FIG. 21 is a schematic structural diagram of an ADN device according to another embodiment of the present invention;
FIG. 22 is a schematic structural diagram of a policy server according to another embodiment of the present invention; and
FIG. 23 is a schematic structural diagram of a gateway device according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

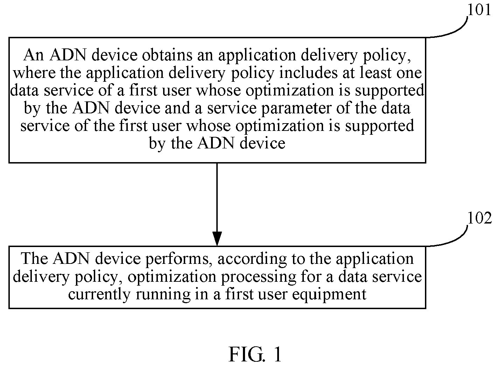

An embodiment of the present invention provides a data processing method. As shown in FIG. 1, the method includes:
Step 101: An ADN device obtains an application delivery policy, where the application delivery policy includes at least one data service of a first user whose optimization is supported by the ADN device and includes a service parameter of the data service of the first user whose optimization is supported by the ADN device.

The ADN device may obtain the application delivery policy in multiple manners. For example, the ADN device may actively obtain the application delivery policy from a policy server, and the policy server may also actively send subscription policy information to the ADN device.

Optionally, when the ADN device actively obtains the application delivery policy from the policy server, the ADN device may send policy request information to the policy server, and may also receive policy response information sent by the policy server; or the ADN device may also send first request information to the policy server, and receive first response information sent by the policy server.

Specifically, the ADN device may send a policy request message to the policy server, where the policy request message carries the policy request information, and the ADN device sends the policy request information to the policy server so that the policy server determines the application delivery policy according to the policy request information, where the policy request information includes a user identity of a first user equipment and application payment functions supported by the ADN device; the ADN device may receive a policy response message sent by the policy server, where the policy response message carries the application delivery policy. The ADN device may also send a first request message to the policy server, where the first request message carries the policy request information, and the ADN device may send the policy request information to the policy server so that the policy server determines the application delivery policy according to the policy request information, where the policy request information includes the user identity of the first user equipment and the application payment functions supported by the ADN device; the ADN device may also receive a first response message sent by the policy server, where the first response message carries the application delivery policy.

Optionally, when the policy server actively sends the subscription policy information to the ADN device, there are two sources from which the ADN device may receive the subscription policy information. One is that the ADN device may receive the subscription policy information sent by the policy server, and the other is that the ADN device may receive the subscription policy information forwarded by a gateway device, where the subscription policy information is generated by the policy server and sent to the gateway device. For example, the gateway device may be any one of a GGSN (Gateway General Packet Radio Service Support Node, gateway general packet radio service support node) network element, a PGW (Packet Data Network Gateway, packet data network gateway) network element, and a PDSN (Packet Data Serving Node, packet data serving node) network element. The subscription policy information includes data services subscribed to by the first user equipment and service parameters of the data services subscribed to by the first user.

When the ADN device may receive the subscription policy information sent by the policy server, the ADN device obtains the subscription policy information, and determines the application delivery policy according to the subscription policy information and the application payment functions supported by the ADN device; or the ADN device receives the subscription policy information forwarded by the gateway device, obtains the subscription policy information, and determines the application delivery policy according to the subscription policy information and the application payment functions supported by the ADN device.

Specifically, the ADN device may receive a subscription policy request message sent by the policy server, where the subscription policy request message carries the subscription policy information; the ADN device determines, according to the application payment functions supported by the ADN device, data services whose optimization is supported by the ADN device; the ADN device uses a same data service in the data services subscribed to by the first user and the data services whose optimization is supported by the ADN device, as the data service of the first user whose optimization is supported by the ADN device, and obtains the service parameter of the data service of the first user whose optimization is supported by the ADN device, from the service parameters of the data services subscribed to by the first user, as the application delivery policy. The ADN device may also receive a second request message sent by the policy server, where the second request message carries the subscription policy information; the ADN device determines, according to the application payment functions supported by the ADN device, the data services whose optimization is supported by the ADN device; the ADN device uses the same data service in the data services subscribed to by the first user and the data services whose optimization is supported by the ADN device, as the data service of the first user whose optimization is supported by the ADN device, and obtains the service parameter of the data service of the first user whose optimization is supported by the ADN device, from the service parameters of the data services subscribed to by the first user, as the application delivery policy.

When the ADN device may receive a subscription policy message sent by the gateway device, the subscription policy message carries the subscription policy information, where the subscription policy information includes the data services subscribed to by the first user and the service parameters of the data services subscribed to by the first user; the ADN device determines, according to the application payment functions supported by the ADN device, data services whose optimization is supported by the ADN device; the ADN device uses a same data service in the data services subscribed to by the first user and the data services whose optimization is supported by the ADN device, as the data service of the first user whose optimization is supported by the ADN device, and obtains the service parameter of the data service of the first user whose optimization is supported by the ADN device, from the service parameters of the data services subscribed to by the first user, as the application delivery policy.

It should be noted that the application delivery policy includes at least one data service of the first user whose optimization is supported by the ADN device and a service parameter of the data service of the first user whose optimization is supported by the ADN device.

Step 102: The ADN device performs, according to the application delivery policy, service processing for a data service currently running in a first user equipment.

In this embodiment of the present invention, the service processing may include multiple types of processing, such as application optimization, security, and management. When the first user equipment runs a data service, the ADN device actively obtains the current data service, and optimizes the data service based on an application delivery policy that is sent by the policy server to the user equipment and corresponding to the data service. The application delivery policy includes at least one video optimization service of the first user equipment whose optimization is supported by the ADN device and a service parameter of the data service of the first user whose optimization is supported by the ADN device. The first user equipment is a user equipment corresponding to the first user. The first user equipment may be a mobile phone, a tablet computer, a notebook computer, and the like.

It should be noted that: the first user may subscribe to one or more data services, and the data services supported by the ADN device may include some of the data services subscribed to by the first user, and may also include all the data services subscribed to by the first user, and may also not include any data service subscribed to by the first user, which is decided by the ADN device.

In this way, by obtaining the application delivery policy and according to the data service of the first user whose optimization is supported by the ADN device and the service parameter of the data service of the first user whose optimization is supported by the ADN device in the application delivery policy, the ADN device performs service processing for the data service currently running in the first user equipment. Therefore, the ADN device can perform optimization according to requirements of data services of different user equipments, thereby improving a processing effect and enhancing user experience.

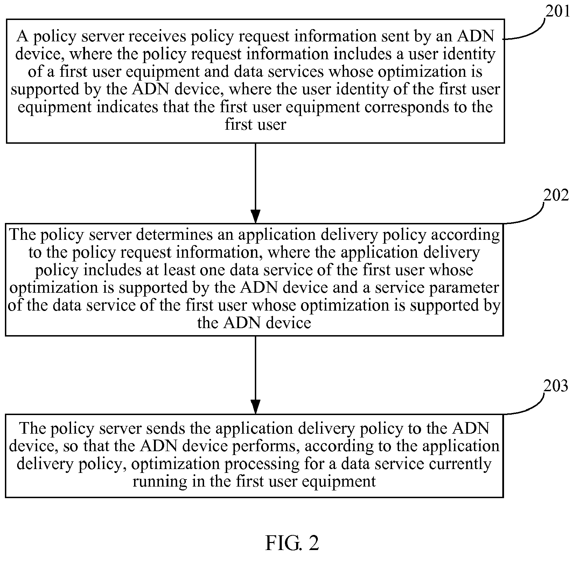

An embodiment of the present invention provides a data processing method. As shown in FIG. 2, the method includes:
Step 201: A policy server receives policy request information sent by an ADN device, where the policy request information includes a user identity of a first user equipment and application payment functions supported by the ADN device, where the user identity of the first user equipment indicates that the first user equipment corresponds to the first user.

Specifically, the policy server may receive a policy request message sent by the ADN device, where the policy request message carries the policy request information, where the policy request information includes the user identity of the first user equipment and the application payment functions supported by the ADN device. The policy server may also receive a first request message sent by the ADN device, where the first request message carries the policy request information, and the first request message includes the user identity of the first user equipment and the application payment functions supported by the ADN device. The policy request message is obtained, so that the policy server determines an application delivery policy according to the policy request information.

Step 202: The policy server determines an application delivery policy according to the policy request information, where the application delivery policy includes at least one data service of the first user whose optimization is supported by the ADN device and a service parameter of the data service of the first user whose optimization is supported by the ADN device.

Specifically, firstly, the policy server may obtain subscription policy information from a policy database of the policy server according to the user identity of the first user equipment, where the subscription policy information includes data services subscribed to by the first user and service parameters of the data services subscribed to by the first user; then the policy server determines, according to the application payment functions supported by the ADN device, data services whose optimization is supported by the ADN device; the policy server uses a same data service in the data services subscribed to by the first user and the data services whose optimization is supported by the ADN device, as the data service of the first user whose optimization is supported by the ADN device. It should be specially noted that the subscription policy information is generated by the policy server and sent to a gateway device, where the gateway device may be any one of a GGSN network element, a PGW network element, and a PDSN network element.

Step 203: The policy server sends the application delivery policy to the ADN device, so that the ADN device performs, according to the application delivery policy, service processing for a data service currently running in the first user equipment.

Specifically, the policy server may send a policy response message to the ADN device, where the policy response message carries the application delivery policy, where the application delivery policy includes the data service of the first user whose optimization is supported by the ADN device and the service parameter of the data service. The policy server may also send a first response message to the ADN device, where the first response message carries the application delivery policy, where the application delivery policy includes the data service of the first user whose optimization is supported by the ADN device and the service parameter of the data service.

In this way, the policy server receives the policy request information sent by the ADN device, determines the application delivery policy according to the policy request information, and then sends the application delivery policy to the ADN device. Therefore, the policy server can send the application delivery policy to the ADN device, and the ADN device can perform more accurate optimization and accurate processing according to requirements of data services of different user equipments, thereby improving an optimization effect and a processing effect and enhancing user experience.

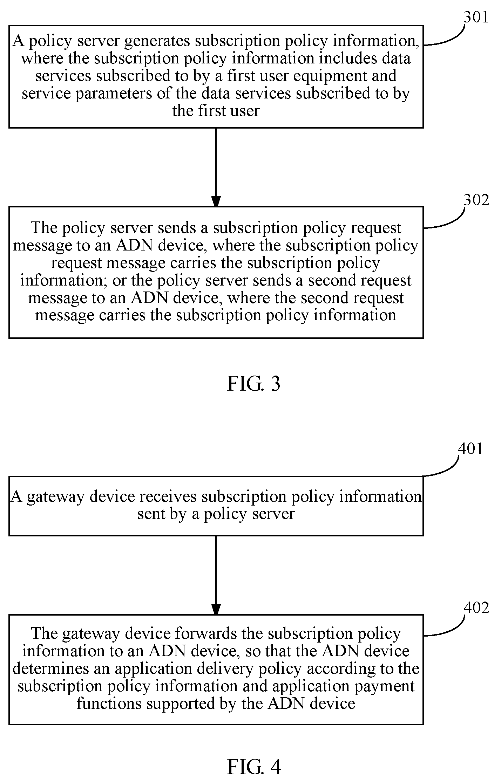

An embodiment of the present invention provides a data processing method. As shown in FIG. 3, the method includes:
Step 301: A policy server generates subscription policy information, where the subscription policy information includes data services subscribed to by a first user equipment and service parameters of the data services subscribed to by the first user.

Specifically, the policy server may query a subscription status of the first user by using a user identity of the first user, and determine the subscription policy information, where the subscription policy information includes the data services subscribed to by the first user and the service parameters of the data services subscribed to by the first user.

When the subscription policy information is a user subscription, the subscription policy information may be generated by the policy server. The policy server saves the subscription policy information to a policy database, and maps the user identity to the subscription policy information of the user, so that it is convenient for the user to query the policy database.

Step 302: The policy server sends a subscription policy request message to an ADN device, where the subscription policy request message carries the subscription policy information; or the policy server sends a second request message to an ADN device, where the second request message carries the subscription policy information.

Specifically, the policy server may send the subscription policy information by using many methods. The policy server may actively send the subscription policy information to the ADN device directly, and the policy server may actively send the subscription policy information to the ADN device indirectly.

Optionally, when the policy server may actively send the subscription policy information to the ADN device directly, the policy server may send the subscription policy information to the ADN device, so that the ADN device determines an application delivery policy according to the subscription policy information and application payment functions supported by the ADN device.

Specifically, the policy server may send a subscription policy request message to the ADN device, where the subscription policy request message carries the subscription policy information, where the subscription policy information includes the data services subscribed to by the first user and the service parameters of the data services subscribed to by the first user. The policy server may also send a second request message to the ADN device, where the second request message carries the subscription policy information, where the subscription policy information includes the data services subscribed to by the first user and the service parameters of the data services subscribed to by the first user. The policy server sends the subscription policy information to the ADN device, so that the ADN device determines the application delivery policy according to the subscription policy information and the application payment functions supported by the ADN device.

Optionally, when the policy server may actively send a subscription policy message to the ADN device indirectly, the policy server may send the subscription policy information to a gateway device. Therefore, when no interface exists between the ADN device and the policy server, the ADN device may receive the subscription policy information and determine the application delivery policy according to the subscription policy information and the application payment functions supported by the ADN device.

Specifically, the policy server sends the subscription policy information to the gateway device by sending a subscription policy response message, where the subscription policy response message carries the subscription policy information, where the subscription policy information includes the data services subscribed to by the first user and the service parameters of the data services subscribed to by the first user. The subscription information is obtained; therefore, when no interface exists between the ADN device and the policy server, the ADN device may receive the subscription policy information and determine the application delivery policy according to the subscription policy information and the application payment functions supported by the ADN device.

It should be specially noted that the subscription policy information is generated by the policy server and sent to the gateway device, where the gateway device is any one of a GGSN network element, a PGW network element, and a PDSN network element.

In this way, the policy server sends the subscription policy information, so that the ADN device receives the subscription policy information and then determines the application delivery policy according to the subscription policy information, a data services whose optimization is supported by the ADN device, and a service parameter of the data service. Therefore, the ADN device can perform more accurate processing for services according to service parameters of different services, thereby improving a processing effect and enhancing user experience.

An embodiment of the present invention provides a data processing method. As shown in FIG. 4, the method includes:
Step 401: A gateway device receives subscription policy information sent by a policy server.
Step 402: The gateway device forwards the subscription policy information to an ADN device, so that the ADN device determines an application delivery policy according to the subscription policy information and application payment functions supported by the ADN device.

Specifically, the gateway device receives a subscription policy response message sent by the policy server, where the subscription policy response message carries the subscription policy information, where the subscription policy includes data services subscribed to by a first user and service parameters of the data services subscribed to by the first user. The gateway device sends a subscription policy message to the ADN device, where the subscription policy message carries the subscription policy information, where the subscription policy information includes the data services subscribed to by the first user and the service parameters of the data services subscribed to by the first user.

It should be specially noted that the subscription policy information is generated by the policy server and sent to the gateway device, where the gateway device is any one of a GGSN network element, a PGW network element, and a PDSN network element.

In this way, the gateway device receives the subscription policy information sent by the policy server, and sends the subscription policy message to the ADN device. Therefore, the policy server can forward the application delivery policy of the first user whose optimization is supported by the ADN device to the ADN device, and the ADN device can perform more accurate processing according to requirements of data services of different user equipments, thereby improving a processing effect and enhancing user experience.

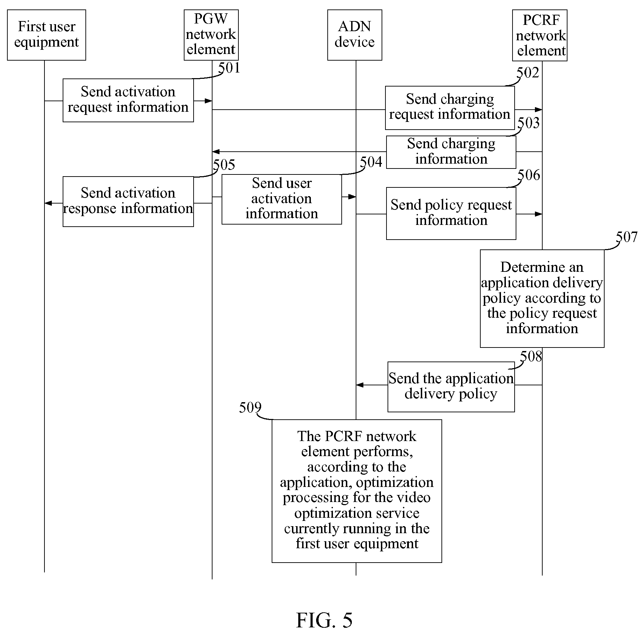

An embodiment of the present invention provides a data processing method. It is assumed that a policy server is a PCRF network element, that a gateway device is a PGW network element, and that a data service subscribed to by a first user is a video optimization service. When an ADN device actively obtains an application delivery policy, the ADN device and the PCRF network element support a Gx interface, where the Gx interface is defined in the 3GPP TS 29.211 protocol. As shown in FIG. 5, the method includes:
Step 501: A first user equipment sends activation request information to the PGW network element.

When the first user watches a video by using the first user equipment, the first user equipment sends an activation request message to a PCEF network element, where the activation request message carries the activation request information, where the activation request information includes a user ID of the first user and an ID of the first user equipment, so that the PGW network element obtains an operator of the first user and determines functions supported by the first user equipment.

It should be noted that when the first user uses, for the first time, the first user equipment to run the data service subscribed to, the first user equipment records the user ID of the first user.

Step 502: The PGW network element sends charging request information to the PCRF network element.

The PGW network element sends a CCR message to the PCRF network element, where the CCR message carries the charging request information, where the charging request information includes the user ID of the first user and the ID of the first user equipment, so that a charging policy for the data service of the first user is obtained. When the first user is activated, the PGW network element is unable to know the data service that is subsequently transmitted by the first user by using the first user equipment; therefore, the charging policy to be obtained by the PGW network element for the data service of the first user is all data services of the first user.

Step 503: The PCRF network element sends a charging and control policy to the PGW network element.

The PCRF network element sends a CCA (Credit Control Answer, credit control answer) message to the ADN device, where the CCA message carries the charging and control policy. The charging and control policy includes a charging policy for the data service of the first user, and the charging policy for the data service of the first user is all the data services of the first user.

Step 504: The PGW network element sends user activation information to the ADN device.

Specifically, if the PGW network element receives the charging and control policy sent by the PCRF, the PGW network element may send a Remote Authentication Dial In User Service message to the ADN device, where the Remote Authentication Dial In User Service message carries the user activation information. The user activation information includes the user ID of the first user, where the user ID of the first user is used to obtain the data service subscribed to by the first user and a service parameter of the data service subscribed to.

Step 505: The PGW network element sends activation response information to the first user equipment.

The PGW network element sends an activation response message to the first user equipment, where the activation response message carries the activation response information. In this embodiment, the activation information includes an activation response code to notify whether the first user is successfully activated.

Step 506: The ADN device sends policy request information to the PCRF network element.

In actual applications, the policy request information may be transferred in two forms: One is that an extended CCR message is used to carry the policy request information; the other is that a first request message is used to carry the policy request information. The first request message is a newly added request message, and the extended CCR message is a message extended from an existing CCR message. When the extended CCR message is used to carry the policy request information, the message sent by the ADN device to the PCRF network element is the extended CCR message, which may effectively save communication resources.

Specifically, when the extended CCR message is used to carry the policy request information, the ADN device sends the extended CCR message to the PCRF network element, where the extended CCR message carries the policy request information, where the policy request information includes the user ID of the first user and application payment functions supported by the ADN device, where the application payment functions may include a video optimization function, a web page optimization function, an antivirus function, and the like, and a correspondence exists between the application payment functions and data services subscribed to by the first user. When the first request message is used to carry the policy request information, the ADN device sends the first request message to the PCRF network element, where the first request message carries the policy request information, where the policy request information includes the user ID of the first user and the application payment functions supported by the ADN device, where the application payment functions may include the video optimization function, the web page optimization function, the antivirus function, and the like, and a correspondence exists between the application payment functions supported by the ADN device and data services supported by the ADN device.

Exemplarily, when the extended CCR message is used to carry the policy request information, it is assumed that the application payment functions supported by the ADN device include the video optimization function and the web page optimization function.

The ADN device sends the extended CCR message to the PCRF network element, where the extended CCR message carries an AVP (Attribute-Value-Pair, attribute-value pair). The AVP includes the user ID and an application payment function list supported by the ADN device, as shown in Table 1. The user ID is used to determine a subscription status of the first user, so that the data service subscribed to by the first user is obtained. The application payment function list supported by the ADN device is a list of application payment functions that are supported by the ADN device or not. In Table 1, the ADN device supports the video optimization function and the web page optimization function; indicator values of the application payment functions supported by the ADN device in the application payment function list of the ADN device are set to 1, and an indicator value of the application payment function that is not supported is set to 0.

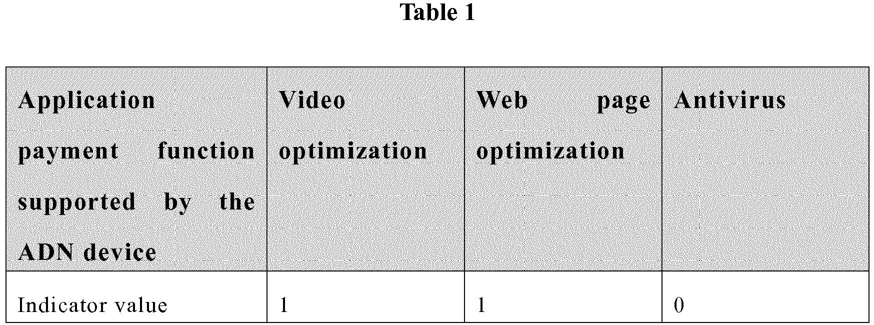

When the first request message is used to carry the policy request information, the ADN device sends the first request message to the PCRF network element, where the first request message carries an extended AVP. The extended AVP includes the user ID and the application payment function list supported by the ADN device, as shown in Table 1. The user ID is used to determine the subscription status of the first user, so that the data service subscribed to by the first user is obtained. The application payment function list supported by the ADN device is a list of application payment functions that are supported by the ADN device or not. In Table 1, the ADN device supports the video optimization function and the web page optimization function; the indicator values of the application payment functions supported by the ADN device in the application payment function list of the ADN device are set to 1, and the indicator value of the application payment function that is not supported is set to 0.

Step 507: The PCRF network element determines an application delivery policy according to the policy request information.

Firstly, the PCRF network element obtains, according to the user ID of the first user obtained from the policy request information, subscription policy information corresponding to the user ID of the first user from a policy database of the PCRF network element, where the subscription policy information includes the video optimization service of the first user and a service parameter of the video optimization service of the first user.

Secondly, the PCRF network element determines, according to the application payment functions supported by the ADN device, data services whose optimization is supported by the ADN device.

The application payment function list supported by the ADN device and obtained by the PCRF network element is shown in Table 1. The application payment functions supported by the ADN device are the video optimization function and the web page optimization function. The application payment functions supported by the ADN device correspond to the data services whose optimization is supported by the ADN device. The data services whose optimization is supported by the ADN device are the video optimization service and the web page optimization service.

Then, the PCRF network element determines, according to the data services whose optimization is supported by the ADN device, whether the video optimization service, namely, the data service subscribed to by the first user, is a data service whose optimization is supported by the ADN device. If the video optimization service is a data service whose optimization is supported by the ADN device, the video optimization service is used as a data service of the first user whose optimization is supported by the ADN device, and the service parameter of the video optimization service is used as a service parameter of the data service of the first user whose optimization is supported by the ADN device.

The application delivery policy includes the video optimization service and the service parameter of the video optimization service. The service parameter of the video optimization service includes an optimization level, a transcoding policy, whether pacing is enabled, whether an SP (Server Provider, server provider) URL (Uniform/Universal Resource Locator, uniform resource locator) or a domain name blacklist for video optimization is supported, and whether an SP URL or a domain name whitelist for video optimization is supported.

Step 508: The PCRF network element sends the application delivery policy to the ADN device.

In actual applications, the application delivery policy may be transferred in two forms: One is that an extended CCA message is used to carry the application delivery policy; the other is that a first response message is used to carry the application delivery policy. The first response message is a newly added response message, and the extended CCA message is a message extended from an existing CCA message. When the extended CCA message is used to carry the application delivery policy, the message sent by the PCRF network element to the ADN device is the extended CCA message, which may effectively save communication resources.

Exemplarily, when the extended CCA message is used to carry the application delivery policy, the PCRF network element may send the CCA message to the ADN device, where the extended CCA message carries the application delivery policy, where the application delivery policy includes a newly added AVP and a video optimization class. The newly added AVP includes the video optimization service of the first user whose optimization is supported by the ADN device. The video optimization class includes the service parameter of the video optimization service of the first user whose optimization is supported by the ADN device. The service parameter of the video optimization service of the first user whose optimization is supported by the ADN device include video optimization parameters such as an optimization level, a transcoding policy, whether a pacing function is enabled, and one of an SP URL blacklist/whitelist and a domain name list.

When the first response message is used to carry the application delivery policy, the PCRF network element may also send the first response message to the ADN device, where the first response message carries the application delivery policy, where the application delivery policy includes a newly added AVP and a video optimization class. The newly added AVP includes the video optimization service of the first user whose optimization is supported by the ADN device. The video optimization class includes the service parameter of the video optimization service of the first user whose optimization is supported by the ADN device. The service parameter of the video optimization service of the first user whose optimization is supported by the ADN device include video optimization services such as an optimization level, a transcoding policy, whether a pacing function is enabled, and one of an SP URL blacklist/whitelist and a domain name list.

The ADN device receives the application delivery policy, and saves the application delivery policy to a database of the ADN device, so that a data stream is optimized when the first user is watching the video by using the first user equipment.

Step 509: The PCRF network element performs, according to the application, service processing for the video optimization service currently running in the first user equipment.

When the first user is watching the video by using the first user equipment, the ADN device actively obtains the data stream sent by the first user equipment, queries the database of the ADN device according to the data stream to determine whether the current data service is the video optimization service of the first user whose optimization is supported by the ADN device, and then optimizes the data stream according to the service parameter of the video optimization service of the first user whose optimization is supported by the ADN device. The service parameter of the video optimization service includes video optimization parameters such as an optimization level, a transcoding policy, whether a pacing function is enabled, and one of an SP URL blacklist/whitelist and a domain name list.

It should be noted that a sequence of the steps of the data processing method provided by this embodiment of the present invention may be adjusted properly. For example, a sequence of step 504 and step 505 may be adjusted, and steps may also be added or removed correspondingly according to a situation. Variations of methods readily figured out by any person skilled in the art within the technical scope disclosed in the present invention shall fall within the protection scope of the present invention, and therefore no repeated description is provided.

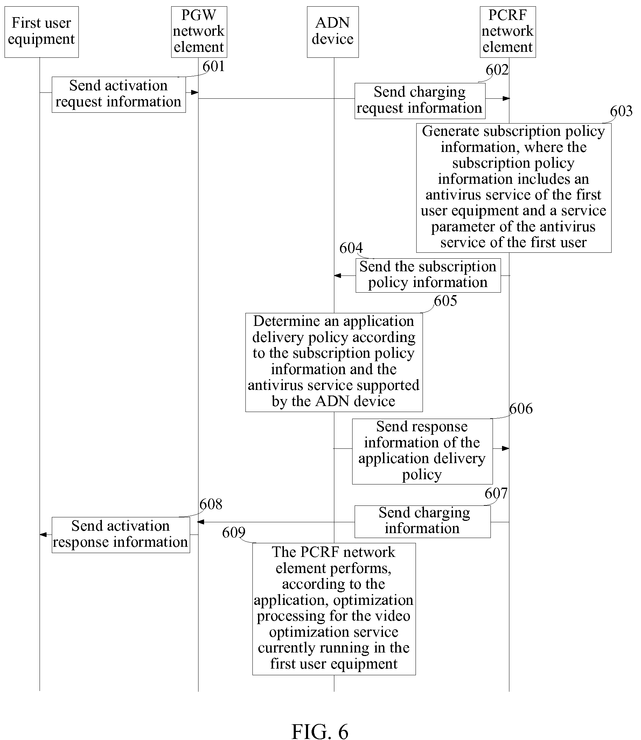

An embodiment of the present invention provides a data processing method. It is assumed that a policy server is a PCRF network element, that a gateway device is a PGW network element, and that a data service subscribed to by a first user is a web page optimization service. When an ADN device actively obtains an application delivery policy, the ADN device and the PCRF network element support an Sd interface, where the Sd interface is defined in the 3GPP (3rd Generation Partnership Project, 3rd Generation Partnership Project) 29213 protocol. As shown in FIG. 6, the method includes:
Step 601: A first user equipment sends activation request information to the PGW network element.

When the first user watches a video by using the first user equipment, the first user equipment sends an activation request message to a PCEF network element, where the activation request message carries the activation request information, where the activation request information includes a user ID of the first user and an ID of the first user equipment, so that the PGW network element obtains an operator of the first user and determines functions supported by the first user equipment.

It should be noted that when the first user uses, for the first time, the first user equipment to run the data service, the first user equipment records the user ID of the first user.

Step 602: The PGW network element sends charging request information to the PCRF network element.

The PGW network element sends a CCR message to the PCRF network element, where the CCR message carries the charging request information, where the charging request information includes the user ID of the first user and the ID of the first user equipment, so that a charging policy for the data service of the first user is obtained. When the first user is activated, the PGW network element is unable to know the data service that is subsequently transmitted by the first user by using the first user equipment; therefore, the charging policy to be obtained by the PGW network element for the data service of the first user is all data services of the first user.

Step 603: Subscription policy information is generated, where the subscription policy information includes the web page optimization service of the first user equipment and a service parameter of the web page optimization service of the first user.

The PCRF network element may query a subscription status of the first user by using the user ID of the first user, and determine the subscription policy information, where the subscription policy information includes the web page optimization service of the first user and the service parameter of the web page optimization service of the first user.

When the subscription policy information is a first user subscription, the subscription policy information may be generated by the PCRF network element. The PCRF network element saves the subscription policy information to a policy database, and maps the user ID to the subscription policy information of the user, so that it is convenient for the user to query the policy database.

Step 604: The PCRF network element sends the subscription policy information to the ADN device.

In actual applications, the subscription policy information may be transferred in two forms: One is that an extended TSR (Traffic Detection Function Session Request, traffic detection function context request) message is used to carry the subscription policy information; the other is that a second request message is used to carry the subscription policy information. The second request message is a newly added request message. The extended TSR message is a message extended from an existing TSR message. When the extended TSR message is used to carry the subscription policy information, the message sent by the PCRF network element to the ADN device is a message extended on the basis of the existing message, which may effectively save communication resources.

The subscription policy information is generated by the PCRF network element. The subscription policy information includes a data service of the first user and a service parameter of the data service of the first user.

Exemplarily, when the extended TSR message is used to carry the subscription policy information, the PCRF network element may send the extended TSR message to the ADN device, where the extended TSR message carries the subscription policy information, where the subscription policy information includes a newly added AVP and a web page optimization class. The newly added AVP includes the web page optimization service. The web page optimization class includes the service parameter of the web page optimization service. The service parameter of the web page optimization service includes multiple parameters related to web page optimization such as a web page compression ratio, a web page acceleration level, and a web page adaptation type. The message sent by the PCRF network element to the ADN device is the extended TSR message, which may save communication resources and provide communication resources for transfer of more information.

When the second request message is used to carry the subscription policy information, the PCRF network element sends the second request message to the ADN device, where the second request message carries the subscription policy information, where the subscription policy information includes a newly added AVP and a web page optimization class. The newly added AVP includes the web page optimization service. The web page optimization class includes the service parameter of the web page optimization service. The service parameter of the web page optimization service includes multiple parameters related to web page optimization such as a web page compression ratio, a web page acceleration level, and a web page adaptation type.

Step 605: The ADN device determines an application delivery policy according to the subscription policy information and the web page optimization service supported by the ADN device.

Exemplarily, assuming that an application payment function list supported by the ADN device is a list of application payment functions that are supported by the ADN device or not, as shown in Table 2, indicator values of the web page optimization function and an antivirus function supported by the ADN device are set to 1, and an indicator value of the application payment function that is not supported is set to 0.

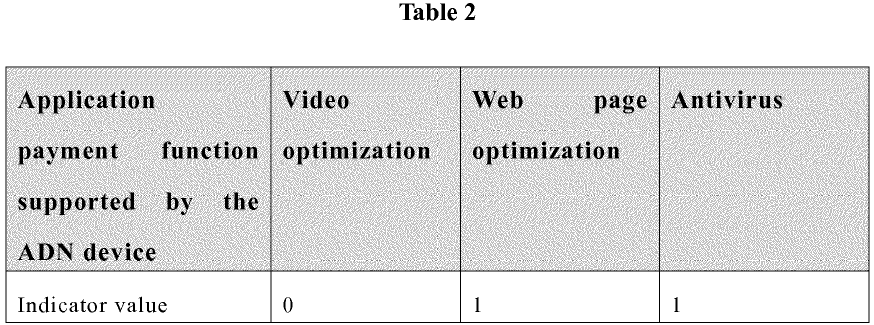

T he app lica tio n payment functions supported by the ADN device are the web page optimization function and the antivirus function. The application payment functions supported by the ADN device correspond to data services whose optimization is supported by the ADN device. The data services whose optimization is supported by the ADN device are the web page optimization service and an antivirus service.

Because the web page optimization service, namely, the data service subscribed to by the first user, is the same as the web page optimization service in the data services whose optimization is supported by the ADN device, the ADN device uses the web page optimization service as a data service of the first user whose optimization is supported by the ADN device in the application payment policy, uses the service parameter of the web page optimization service as a service parameter of the data service of the first user whose optimization is supported by the ADN device in the application payment policy, and saves the application delivery policy to the database of the ADN device, so that a data stream is optimized when the first user is browsing a web page by using the first user equipment.

The service parameter of the web page optimization service of the first user whose optimization is supported by the ADN device includes multiple parameters related to web page optimization such as a web page compression ratio, a web page acceleration level, and a web page adaptation type.

Step 606: The ADN device sends response information of the application delivery policy to the PCRF network element.

In actual applications, the subscription policy information may be transferred in two forms: One is that an extended TSA (Traffic Detection Function Session Answer, traffic detection function context answer) message is used to carry the response information of the application delivery policy; the other is that a second response message is used to carry the response information of the application delivery policy. The second response message is a newly added response message. The extended TSA message is a message extended from an existing TSA message. When the extended TSA message is used to carry the response information of the application delivery policy, the message sent by the ADN device to the PCRF network element is a message extended on the basis of the existing message, which may effectively save communication resources.

Specifically, when the extended TSA message is used to carry the response information of the application delivery policy, the ADN device may send the extended TSA (TDF Session Answer, TDF context answer) message to the PCRF network element, where the extended TSA message carries the response information of the application delivery policy. In this embodiment, the response information of the application delivery policy includes the user ID of the first user and a response code of web page optimization.

When the second response message is used to carry the response information of the application delivery policy, the ADN device may also send the second response message to the PCRF network element, where the second response message carries the response information of the application delivery policy. In this embodiment, the response information of the application delivery policy includes the user ID of the first user and a response code of web page optimization, where the response code of web page optimization is used to indicate whether the ADN device successfully saves the application delivery policy.

Step 607: The PCRF network element sends a charging and control policy to the PGW network element.

The PCRF network element sends a CCA message to the PGW network element, where the CCA message carries the charging and control policy. The charging and control policy includes a charging policy for the data service of the first user, and the charging policy for the data service of the first user is all the data services of the first user.

Step 608: The PGW network element sends activation response information to the first user equipment.

The PGW network element sends an activation response message to the first user equipment, where the activation response message carries the activation response information. In this embodiment, the activation information includes an activation response code to notify whether the first user is successfully activated.

Step 609: According to the application delivery policy, service processing is performed for the web page optimization service currently running in the first user equipment.

When the first user is browsing a web page by using the first user equipment, the ADN device actively obtains the data stream sent by the first user equipment, queries the database of the ADN device according to the data stream to determine whether the current data service is the web page optimization service of the first user whose optimization is supported by the ADN device, and then optimizes the data stream according to the service parameter of the web page optimization service of the first user whose optimization is supported by the ADN device. The service parameter of the web page optimization service of the first user whose optimization is supported by the ADN device includes multiple parameters related to web page optimization such as a web page compression ratio, a web page acceleration level, and a web page adaptation type.

It should be noted that a sequence of the steps of the data processing method provided by this embodiment of the present invention may be adjusted properly. Steps may also be added or removed correspondingly according to a situation. Variations of methods readily figured out by any person skilled in the art within the technical scope disclosed in the present invention shall fall within the protection scope of the present invention, and therefore no repeated description is provided.

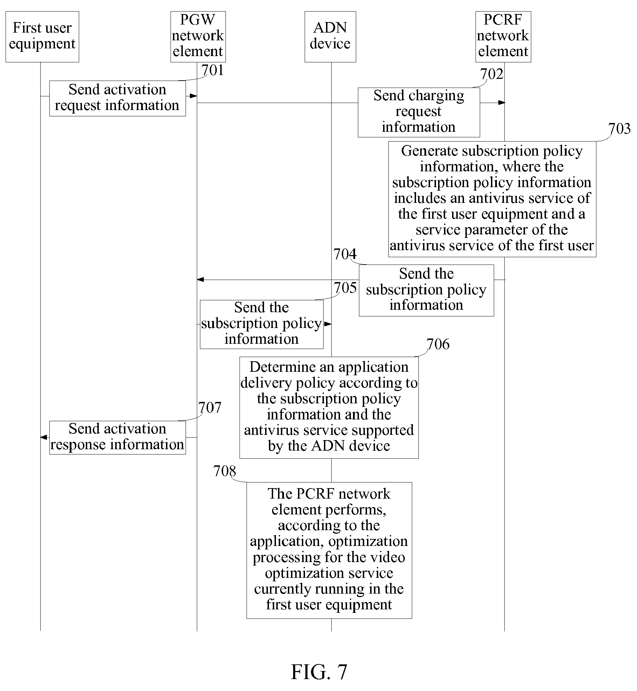

An embodiment of the present invention provides a data processing method. It is assumed that a policy server is a PCRF network element, that a gateway device is a PGW network element, and that a data service subscribed to by a first user is an antivirus service. When an ADN device actively obtains an application delivery policy, the ADN device and the PCRF network element do not support a Gx or Sd interface. As shown in FIG. 7, the method includes:
Step 701: A first user equipment sends activation request information to the PGW network element.

When the first user protects the first user equipment against viruses, the first user equipment sends an activation request message to a PCEF network element, where the activation request message carries the activation request information, where the activation request information includes a user ID of the first user and an ID of the first user equipment, so that the PGW network element obtains an operator of the first user and determines functions supported by the first user equipment.

It should be noted that when the first user uses, for the first time, the first user equipment to run the data service, the first user equipment records the user ID of the first user.

Step 702: The PGW network element sends charging request information to the PCRF network element.

The PGW network element sends a CCR message to the PCRF network element, where the CCR message carries the charging request information, where the charging request information includes the user ID of the first user and the ID of the first user equipment, so that a charging policy for the data service of the first user is obtained. When the first user is activated, the PGW network element is unable to know the data service that is subsequently transmitted by the first user by using the first user equipment; therefore, the charging policy to be obtained by the PGW network element for the data service of the first user is all data services of the first user.

Step 703: Subscription policy information is generated, where the subscription policy information includes the antivirus service of the first user equipment and a service parameter of the antivirus service of the first user.

The PCRF network element may query a subscription status of the first user by using the user ID of the first user, and determine the subscription policy information, where the subscription policy information includes the antivirus service and the service parameter of the antivirus service.

When the subscription policy information is a first user subscription, the subscription policy information may be generated by the PCRF network element. The PCRF network element saves the subscription policy information to a policy database, and maps the user ID to the subscription policy information of the user, so that it is convenient for the user to query the policy database.

Step 704: The PCRF network element sends the subscription policy information to the PGW network element.

The PCRF network element may send an extended Remote Authentication Dial In User Service message to the PGW network element, where the extended Remote Authentication Dial In User Service message carries the subscription policy information. The subscription policy information includes the antivirus service and the service parameter of the antivirus service. The extended Remote Authentication Dial In User Service message is obtained by extending an existing Remote Authentication Dial In User Service message.

Exemplarily, the PCRF network element may send an extended Remote Authentication Dial In User Service message to the PGW network element, where the extended Remote Authentication Dial In User Service message carries the subscription policy information. The subscription policy information includes a newly added AVP and an antivirus class. The newly added AVP includes the antivirus service. The antivirus class includes the service parameter of the antivirus service. The service parameter of the antivirus service includes multiple antivirus-related parameters such as a security level and an address or host blacklist/whitelist. The CCA message is obtained by extension based on an existing message.

Step 705: The PGW network element sends the subscription policy information to the ADN device.

The PGW network element sends a Remote Authentication Dial In User Service message to the ADN device, where the Remote Authentication Dial In User Service message carries the subscription policy information, where the subscription policy information includes the antivirus service and the service parameter of the antivirus service.

Exemplarily, the PGW network element sends a Remote Authentication Dial In User Service message to the ADN device, where the Remote Authentication Dial In User Service message carries the subscription policy information. The subscription policy information includes a newly added AVP and an antivirus class. The newly added AVP includes the antivirus service. The antivirus class includes the service parameter of the antivirus service. The service parameter of the antivirus service includes multiple antivirus-related parameters such as a security level and an address or host blacklist/whitelist.

Step 706: The ADN device determines an application delivery policy according to the subscription policy information and the antivirus service supported by the ADN device.

Exemplarily, assuming that an application payment function list supported by the ADN device is a list of application payment functions that are supported by the ADN device or not, as shown in Table 3, indicator values of a video optimization function and an antivirus function supported by the ADN device are set to 1, and an indicator value of the application payment function that is not supported is set to 0.

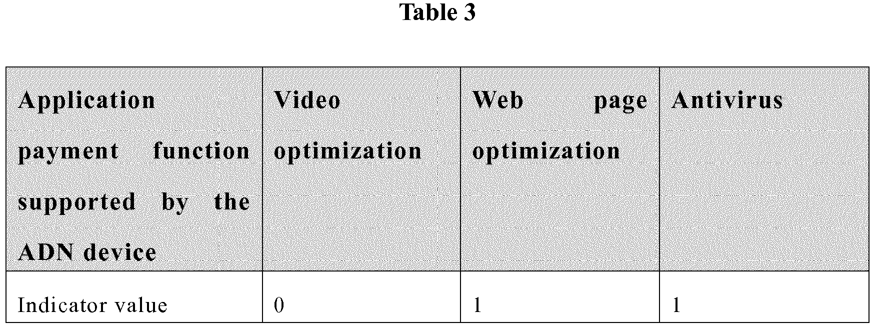

T he app lica tio n payment functions supported by the ADN device are the video optimization function and the antivirus function. The application payment functions supported by the ADN device correspond to data services whose optimization is supported by the ADN device. The data services whose optimization is supported by the ADN device are a video optimization service and the antivirus service.

Because the antivirus service, namely, the data service subscribed to by the first user, is the same as the antivirus service in the data services whose optimization is supported by the ADN device, the ADN device uses the antivirus service as a data service of the first user whose optimization is supported by the ADN device in the application payment policy, uses the service parameter of the antivirus service as a service parameter of the data service of the first user whose optimization is supported by the ADN device in the application payment policy, and saves the application delivery policy to a database of the ADN device, so that a data stream is optimized when the first user is protecting the first user equipment against viruses.

The service parameter of the data service of the first user whose optimization is supported by the ADN device includes multiple antivirus-related parameters such as a security level and an address or host blacklist/whitelist.

Step 707: The PGW network element sends an activation response message to the first user equipment.

The PGW network element sends an activation response message to the first user equipment, where the activation response message carries the activation response information. In this embodiment, the activation information includes an activation response code to notify whether the first user is successfully activated.

Step 708: According to the application delivery policy, antivirus security processing is performed for the data service accessed by the first user equipment.

When the first user equipment is being protected against viruses, the ADN device actively obtains the data stream of the first user equipment, queries the database of the ADN device according to the data stream to determine that the current data service is the antivirus service of the first user whose optimization is supported by the ADN device, and then performs security processing for the data stream according to the service parameter of the antivirus service of the first user whose optimization is supported by the ADN device. The service parameter of the antivirus service of the first user whose optimization is supported by the ADN device includes multiple antivirus-related parameters such as a security level and an address or host blacklist/whitelist.

It should be noted that a sequence of the steps of the data processing method provided by this embodiment of the present invention may be adjusted properly. Steps may also be added or removed correspondingly according to a situation. Variations of methods readily figured out by any person skilled in the art within the technical scope disclosed in the present invention shall fall within the protection scope of the present invention, and therefore no repeated description is provided.

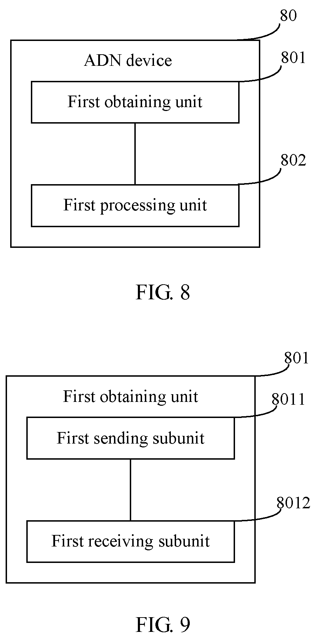

As shown in FIG. 8, an embodiment of the present invention provides an ADN device 80, including:
a first obtaining unit 801, configured to obtain an application delivery policy, where the application delivery policy includes at least one data service of a first user whose optimization is supported by the ADN device and a service parameter of the data service of the first user whose optimization is supported by the ADN device; and
a first processing unit 802, configured to perform, according to the application delivery policy, service processing for a data service currently running in the first user equipment, where the first user equipment is a user equipment corresponding to the first user.

In this way, by obtaining the application delivery policy and according to the data service of the first user whose optimization is supported by the ADN device and the service parameter of the data service of the first user whose optimization is supported by the ADN device in the application delivery policy, the ADN device performs service processing for the data service currently running in the first user equipment. Therefore, the ADN device can perform processing according to requirements of data services of different user equipments, thereby improving a processing effect and enhancing user experience.

As shown in FIG. 9, the first obtaining unit 801 includes:
a first sending subunit 8011, configured to send policy request information to a policy server, so that the policy server determines the application delivery policy according to the policy request information, where the policy request information includes a user identity of the first user equipment and application payment functions supported by the ADN device, where the user identity of the first user equipment indicates that the first user equipment corresponds to the first user, where
specifically, the first sending subunit 8011 sends a policy request message to the policy server, where the policy request message carries the policy request information; or the first sending subunit 8011 sends a first request message to the policy server, where the first request message carries the policy request information; and
a first receiving subunit 8012, configured to receive the application delivery policy sent by the policy server.

Specifically, the first receiving subunit 8012 receives a policy response message sent by the policy server, where the policy response message carries the application delivery policy; or the first receiving subunit 8012 receives a first response message sent by the policy server, where the first response message carries the application delivery policy.

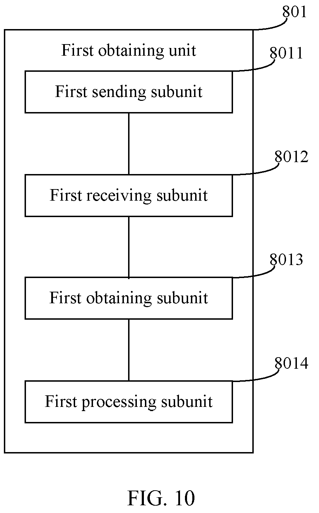

As shown in FIG. 10, the first obtaining unit 801 further includes:
a first obtaining subunit 8013, configured to obtain subscription policy information, where the subscription policy information is generated by the policy server, and the subscription policy information includes data services subscribed to by the first user and service parameters of the data services subscribed to by the first user; and
a first processing subunit 8014, configured to determine the application delivery policy according to the subscription policy information and the application payment functions supported by the ADN device.

Specifically, the first processing subunit 8014 determines, according to the application payment functions supported by the ADN device, data services whose optimization is supported by the ADN device; the first processing subunit 8014 uses a same data service in the data services subscribed to by the first user and the data services whose optimization is supported by the ADN device, as the data service of the first user whose optimization is supported by the ADN device; the first processing subunit 8014 obtains the service parameter of the data service of the first user whose optimization is supported by the ADN device, from the service parameters of the data services subscribed to by the first user.

There are two sources from which the first obtaining subunit 8013 obtains the subscription policy information. One is that the first obtaining subunit 8013 receives the subscription policy information sent by the policy server, and the other is that the first obtaining subunit 8013 receives a subscription policy message sent by a gateway device.

Optionally, the first obtaining subunit 8013 is configured to receive the subscription policy information sent by the policy server. Specifically, the first obtaining subunit 8013 receives a subscription policy request message sent by the policy server, where the subscription policy request message carries the subscription policy information, or receives a second request message sent by the policy server, where the second request message carries the subscription policy information.

Optionally, the first obtaining subunit 8013 is configured to receive the subscription policy information forwarded by the gateway device, where the subscription policy information is generated by the policy server and sent to the gateway device, and the gateway device is any one of a gateway general packet radio service support node GGSN network element, a packet data network gateway PGW network element, and a packet data serving node PDSN network element.

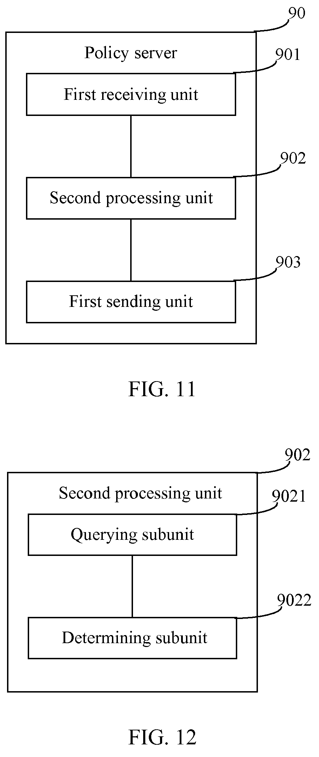

As shown in FIG. 11, an embodiment of the present invention provides a policy server 90, including:
a first receiving unit 901, configured to receive policy request information sent by an ADN device, where the policy request information includes a user identity of a first user equipment and application payment functions supported by the ADN device, where the user identity of the first user equipment indicates that the first user equipment corresponds to the first user;
a second processing unit 902, configured to determine an application delivery policy according to the policy request information, where the application delivery policy includes at least one data service of the first user whose optimization is supported by the ADN device and a service parameter of the data service of the first user whose optimization is supported by the ADN device; and
a first sending unit 903, configured to send the application delivery policy to the ADN device, so that the ADN device performs, according to the application delivery policy, service processing for a data service currently running in the first user equipment.

In this way, the policy server receives the policy request information sent by the ADN device; the second processing unit determines the application delivery policy according to the policy request information, and sends the application delivery policy to the ADN device. Therefore, the policy server can send the application delivery policy to the ADN device, and the ADN device can perform more accurate processing according to requirements of data services of different user equipments, thereby improving a processing effect and enhancing user experience.

As shown in FIG. 12, the second processing unit 902 includes:
a querying subunit 9021, configured to obtain subscription policy information from a policy database of the policy server according to the user identity of the first user equipment, where the subscription policy information includes data services subscribed to by the first user and service parameters of the data services subscribed to by the first user; and
a determining subunit 9022, configured to determine the application delivery policy according to the subscription policy information and the application payment functions supported by the ADN device.

Specifically, the determining subunit 9022 determines, according to the application payment functions supported by the ADN device, data services whose optimization is supported by the ADN device; the determining subunit 9022 uses a same data service in the data services subscribed to by the first user and the data services whose optimization is supported by the ADN device, as the data service of the first user whose optimization is supported by the ADN device; the determining subunit 9022 obtains the service parameter of the data service of the first user whose optimization is supported by the ADN device, from the service parameters of the data services subscribed to by the first user.

The first receiving unit 901 is specifically configured to:
receive a policy request message sent by the ADN device, where the policy request message carries the policy request information; or receive a first request message sent by the ADN device, where the first request message carries the policy request information.

The first sending unit 903 is specifically configured to:
send a policy response message to the ADN device, where the policy response message carries the application delivery policy; or send a first response message to the ADN device, where the first response message carries the application delivery policy.

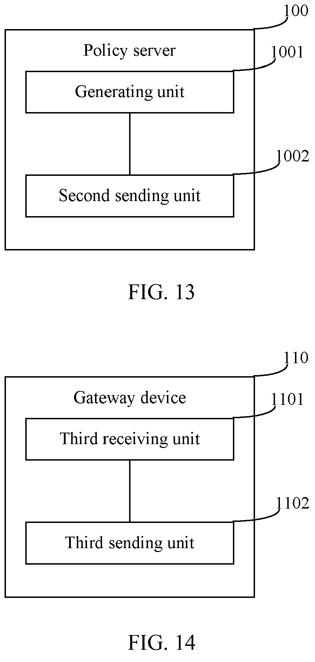

As shown in FIG. 13, an embodiment of the present invention provides a policy server 100, including:
a generating unit 1001, configured to generate subscription policy information, where the subscription policy information includes data services subscribed to by a first user equipment and service parameters of the data services subscribed to by the first user; and
a second sending unit 1002, configured to: send the subscription policy information to an ADN device, so that the ADN device determines an application delivery policy according to the subscription policy information and application payment functions supported by the ADN device; or send the subscription policy information to a gateway device, so that the gateway device forwards the subscription policy information to the ADN device, so that the ADN device determines the application delivery policy according to the subscription policy information and the application payment functions supported by the ADN device.

In this way, the policy server sends the subscription policy information, so that the ADN device receives the subscription policy information and determines the application delivery policy according to the subscription policy information, a data service whose optimization is supported by the ADN device, and a service parameter of the data service. Therefore, the ADN device can perform more accurate processing for services according to service parameters of different services, thereby improving a processing effect and enhancing user experience.

There are two cases in which the second sending unit 1002 is configured to send the subscription policy information. In one case, the second sending unit 1002 is configured to send the subscription policy information to the ADN device; in the other case, the second sending unit 1002 is configured to send the subscription policy information to the gateway device.

Optionally, when the second sending unit 1002 is configured to send the subscription policy information to the ADN device, the second sending unit 1002 is specifically configured to send a subscription policy request message to the ADN device, where the subscription policy request message carries the subscription policy information; or send a second request message to the ADN device, where the second request message carries the subscription policy information.

Optionally, when the second sending unit 1002 sends the subscription policy information to the gateway device, the second sending unit 1002 is configured to send a subscription policy response message to the gateway device, where the subscription policy response message carries the subscription policy information.

As shown in FIG. 14, an embodiment of the present invention provides a gateway device 110, including:
a third receiving unit 1101, configured to receive subscription policy information sent by a policy server, where the third receiving unit 1101 is specifically configured to receive a subscription policy response message sent by the policy server, where the subscription policy response message carries the subscription policy information; and
a third sending unit 1102, configured to forward the subscription policy information to an ADN device, so that the ADN device determines an application delivery policy according to the subscription policy information and application payment functions supported by the ADN device, where the third sending unit 1102 is specifically configured to send a subscription policy message to the ADN device, where the subscription policy message carries the subscription policy information.

In this way, the gateway device receives the subscription policy information sent by the policy server, and sends the subscription policy message to the ADN device. Therefore, the policy server can forward the application delivery policy of a first user whose optimization is supported by the ADN device to the ADN device, and the ADN device can perform more accurate processing according to requirements of data services of different user equipments, thereby improving a processing effect and enhancing user experience.

An embodiment of the present invention provides a communication system. The communication system includes:
any ADN device provided by the embodiments of the present invention; any policy server provided by the embodiments of the present invention; and any gateway device provided by the embodiments of the present invention.

The AND device is configured to: obtain an application delivery policy, where the application delivery policy includes at least one data service of a first user whose optimization is supported by the ADN device and a service parameter of the data service of the first user whose optimization is supported by the ADN device; and perform, according to the application delivery policy, service processing for a data service currently running in the first user equipment, where the first user equipment is a user equipment corresponding to the first user.

The policy server is configured to: receive policy request information sent by the ADN device, where the policy request information includes a user identity of the first user equipment and application payment functions supported by the ADN device, where the user identity of the first user equipment indicates that the first user equipment corresponds to the first user; determine the application delivery policy according to the policy request information, where the application delivery policy includes the at least one data service of the first user whose optimization is supported by the ADN device and the service parameter of the data service of the first user whose optimization is supported by the ADN device; and send the application delivery policy to the ADN device, so that the ADN device performs, according to the application delivery policy, the service processing for the data service currently running in the first user equipment. Alternatively, the policy server is configured to: generate subscription policy information, where the subscription policy information includes data services subscribed to by the first user equipment and service parameters of the data services subscribed to by the first user; and send the subscription policy information to the ADN device, so that the ADN device determines the application delivery policy according to the subscription policy information and application payment functions supported by the ADN device, or send the subscription policy information to the gateway device, so that the gateway device forwards the subscription policy information to the ADN device, and the ADN device determines the application delivery policy according to the subscription policy information and the application payment functions supported by the ADN device.

The gateway device is configured to: receive the subscription policy information sent by the policy server; and forward the subscription policy information to the ADN device, so that the ADN device determines the application delivery policy according to the subscription policy information and the application payment functions supported by the ADN device.

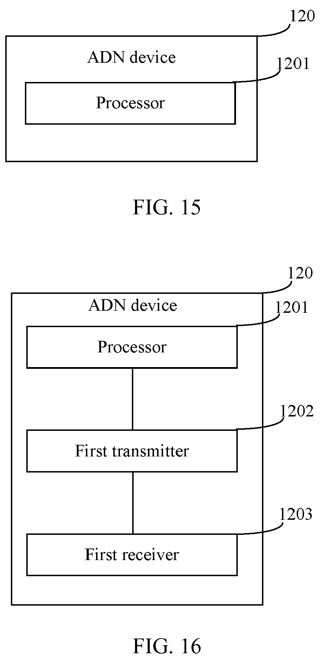

As shown in FIG. 15, an embodiment of the present invention provides an ADN device 120, including:
a processor 1201, configured to obtain an application delivery policy, where the application delivery policy includes at least one data service of a first user whose optimization is supported by the ADN device and a service parameter of the data service of the first user whose optimization is supported by the ADN device; and further configured to perform, according to the application delivery policy, service processing for a data service currently running in the first user equipment, where the first user equipment is a user equipment corresponding to the first user.

In this way, by obtaining the application delivery policy and according to the data service of the first user whose optimization is supported by the ADN device and the service parameter of the data service of the first user whose optimization is supported by the ADN device in the application delivery policy, the ADN device performs service processing for the data service currently running in the first user equipment. Therefore, the ADN device can perform processing according to requirements of data services of different user equipments, thereby improving a processing effect and enhancing user experience.

As shown in FIG. 16, the ADN device 120 further includes:
a first transmitter 1202, configured to send policy request information to the policy server, so that the policy server determines the application delivery policy according to the policy request information, where the policy request information includes a user identity of the first user equipment and application payment functions supported by the ADN device, where the user identity of the first user equipment indicates that the first user equipment corresponds to the first user; where, the first transmitter is specifically configured to send a policy request message to the policy server, where the policy request message carries the policy request information, or send a first request message to the policy server, where the first request message carries the policy request information; and
a first receiver 1203, configured to receive the application delivery policy sent by the policy server; where, the first receiver is specifically configured to receive a policy response message sent by the policy server, where the policy response message carries the application delivery policy, or receive a first response message sent by the policy server, where the first response message carries the application delivery policy.

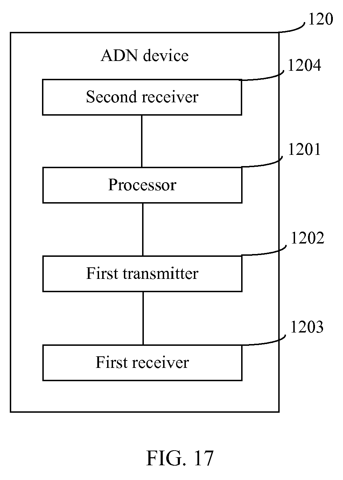

As shown in FIG. 17, the ADN device 120 further includes:
the processor 1201, further configured to: obtain subscription policy information, where the subscription policy information is generated by the policy server, and the subscription policy information includes data services subscribed to by the first user and service parameters of the data services subscribed to by the first user; and determine the application delivery policy according to the subscription policy information and the application payment functions supported by the ADN device. The processor 1201 is specifically configured to: determine, according to the application payment functions supported by the ADN device, data services whose optimization is supported by the ADN device; use a same data service in the data services subscribed to by the first user and the data services whose optimization is supported by the ADN device, as the data service of the first user whose optimization is supported by the ADN device; and obtain the service parameter of the data service of the first user whose optimization is supported by the ADN device, from the service parameters of the data services subscribed to by the first user.

A second receiver 1204 is configured to receive the subscription policy information. There are two sources from which the second receiver 1204 receives the subscription policy information. One is that the second receiver 1204 receives the subscription policy information sent by the policy server, and the other is that the second receiver 1204 receives the subscription policy information forwarded by a gateway device, where the subscription policy information is generated by the policy server and sent to the gateway device, and the gateway device is any one of a gateway general packet radio service support node GGSN network element, a packet data network gateway PGW network element, and a packet data serving node PDSN network element.

Optionally, the second receiver 1204 is specifically configured to: receive a subscription policy request message sent by the policy server, where the subscription policy request message carries the subscription policy information; or receive a second request message sent by the policy server, where the second request message carries the subscription policy information.

Optionally, the second receiver 1204 is specifically configured to receive a subscription policy message sent by the gateway device, where the subscription policy message carries the subscription policy information.

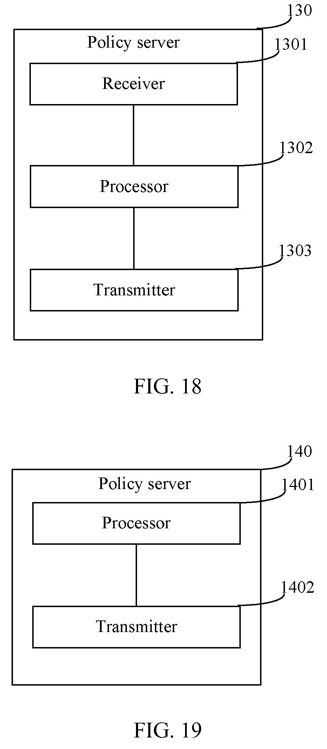

As shown in FIG. 18, an embodiment of the present invention provides a policy server 130, including:
a receiver 1301, configured to receive policy request information sent by an ADN device, where the policy request information includes a user identity of a first user equipment and application payment functions supported by the ADN device, where the user identity of the first user equipment indicates that the first user equipment corresponds to the first user;
a processor 1302, configured to determine an application delivery policy according to the policy request information, where the application delivery policy includes at least one data service of the first user whose optimization is supported by the ADN device and a service parameter of the data service of the first user whose optimization is supported by the ADN device; and
a transmitter 1303, configured to send the application delivery policy to the ADN device, so that the ADN device performs, according to the application delivery policy, service processing for a data service currently running in the first user equipment.

In this way, the policy server receives the policy request information sent by the ADN device, determines the application delivery policy according to the policy request information, and then sends the application delivery policy to the ADN device. Therefore, the policy server can send the application delivery policy to the ADN device, and the ADN device can perform more accurate processing according to requirements of data services of different user equipments, thereby improving a processing effect and enhancing user experience.

The processor 1302 is configured to: obtain subscription policy information from a policy database of the policy server according to the user identity of the first user equipment, where the subscription policy information includes data services subscribed to by the first user and service parameters of the data services subscribed to by the first user; and determine the application delivery policy according to the subscription policy information and the application payment functions supported by the ADN device. The processor 1302 is specifically configured to: determine, according to the application payment functions supported by the ADN device, data services whose optimization is supported by the ADN device; use a same data service in the data services subscribed to by the first user and the data services whose optimization is supported by the ADN device, as the data service of the first user whose optimization is supported by the ADN device; and obtain the service parameter of the data service of the first user whose optimization is supported by the ADN device, from the service parameters of the data services subscribed to by the first user.

The receiver 1301 is configured to: receive a policy request message sent by the ADN device, where the policy request message carries the policy request information; or receive a first request message sent by the ADN device, where the first request message carries the policy request information.

The transmitter 1303 is specifically configured to: send a policy response message to the ADN device, where the policy response message carries the application delivery policy; or send a first response message to the ADN device, where the first response message carries the application delivery policy.

As shown in FIG. 19, an embodiment of the present invention provides a policy server 140, including:
a processor 1401, configured to generate subscription policy information, where the subscription policy information includes data services subscribed to by a first user equipment and service parameters of the data services subscribed to by the first user; and
a transmitter 1402, configured to: send the subscription policy information to an ADN device, so that the ADN device determines an application delivery policy according to the subscription policy information and application payment functions supported by the ADN device; or send the subscription policy information to a gateway device, so that the gateway device forwards the subscription policy information to the ADN device, so that the ADN device determines the application delivery policy according to the subscription policy information and the application payment functions supported by the ADN device.

In this way, the transmitter sends the subscription policy information, so that the ADN device receives the subscription policy information and then determines the application delivery policy according to the subscription policy information, a data service whose optimization is supported by the ADN device, and a service parameter of the data service. Therefore, the ADN device can perform more accurate processing for services according to service parameters of different services, thereby improving a processing effect and enhancing user experience.

There are two cases in which the transmitter 1402 is configured to send the subscription policy information. In one case, the transmitter 1402 is configured to send the subscription policy information to the ADN device; in the other case, the transmitter 1402 is configured to send the subscription policy information to the gateway device.

Optionally, when the transmitter 1402 is configured to send the subscription policy information to the ADN device, the transmitter 1402 is specifically configured to send a subscription policy request message to the ADN device, where the subscription policy request message carries the subscription policy information; or the transmitter 1402 sends a second request message to the ADN device, where the second request message carries the subscription policy information.

Optionally, when the transmitter 1402 is configured to send the subscription policy information to the gateway device, the transmitter 1402 is specifically configured to send a subscription policy response message to the gateway device, where the subscription policy response message carries the subscription policy information.

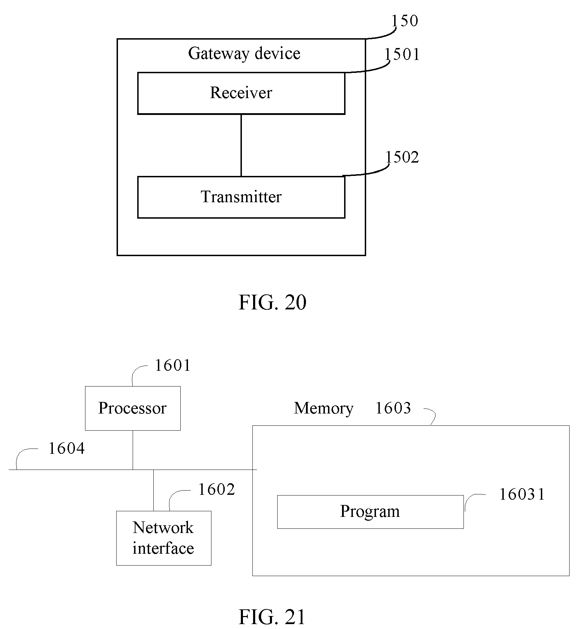

As shown in FIG. 20, an embodiment of the present invention provides a gateway device 150, including:
a receiver 1501, configured to receive subscription policy information sent by a policy server, where the receiver 1501 is specifically configured to receive a subscription policy response message sent by the policy server, where the subscription policy response message carries the subscription policy information; and
a transmitter 1502, configured to forward the subscription policy information to an ADN device, so that the ADN device determines an application delivery policy according to the subscription policy information and application payment functions supported by the ADN device, where the transmitter 1502 is specifically configured to send a subscription policy message to the ADN device, where the subscription policy message carries the subscription policy information.

In this way, the gateway device receives the subscription policy information sent by the policy server, and sends the subscription policy message to the ADN device. Therefore, the policy server can forward the application delivery policy of a first user whose optimization is supported by the ADN device to the ADN device, and the ADN device can perform more accurate processing according to requirements of data services of different user equipments, thereby improving a processing effect and enhancing user experience.

An embodiment of the present invention provides a communication system. The communication system includes:
any ADN device provided by the embodiments of the present invention; and any policy server provided by the embodiments of the present invention.

An embodiment of the present invention provides a communication system. The communication system includes:
any ADN device provided by the embodiments of the present invention; any policy server provided by the embodiments of the present invention; and any gateway device provided by the embodiments of the present invention.

FIG. 21 shows a structure of an ADN device according to another embodiment of the present invention, including at least one processor 1601 (for example, a CPU), at least one network interface 1602 or other communication interface, a memory 1603, and at least one communication bus 1604 configured to implement connection and communication between these apparatuses. The processor 1601 is configured to execute an executable module stored in the memory 1603, for example, a computer program. The memory 1603 may include a high-speed random access memory (RAM, Random Access Memory), and may further include a non-volatile memory (non-volatile memory), for example, at least one magnetic disk storage. By means of the at least one network interface 1602 (which may be wired or wireless), a communication connection is implemented between a system gateway of the browser and at least one other network element, and the Internet, a wide area network, a local network, a metropolitan area network, and the like may be used.

In some implementation manners, the memory 1603 stores a program 16031, where the program 16031 may be executed by the processor 1601. The program 16031 includes:
obtaining an application delivery policy, where the application delivery policy includes at least one data service of a first user whose optimization is supported by the ADN device and a service parameter of the data service of the first user whose optimization is supported by the ADN device; and
performing, according to the application delivery policy, service processing for a data service currently running in the first user equipment, where the first user equipment is a user equipment corresponding to the first user.

The obtaining an application delivery policy includes:
sending policy request information to the policy server, so that the policy server determines the application delivery policy according to the policy request information, where the policy request information includes a user identity of the first user equipment and application payment functions supported by the ADN device, where the user identity of the first user equipment indicates that the first user equipment corresponds to the first user; and
receiving the application delivery policy sent by the policy server.

The obtaining an application delivery policy includes:
obtaining subscription policy information, where the subscription policy information is generated by a policy server, and the subscription policy information includes data services subscribed to by the first user and service parameters of the data services subscribed to by the first user; and
determining the application delivery policy according to the subscription policy information and application payment functions supported by the ADN device.

The obtaining subscription policy information includes:
receiving the subscription policy information sent by the policy server; or
receiving the subscription policy information forwarded by a gateway device, where the subscription policy information is generated by the policy server and sent to the gateway device, and the gateway device is any one of a gateway general packet radio service support node GGSN network element, a packet data network gateway PGW network element, and a packet data serving node PDSN network element.

The determining the application delivery policy according to the subscription policy information and application payment functions supported by the ADN device includes:
determining, according to the application payment functions supported by the ADN device, data services whose optimization is supported by the ADN device;
using a same data service in the data services subscribed to by the first user and the data services whose optimization is supported by the ADN device, as the data service of the first user whose optimization is supported by the ADN device; and
obtaining the service parameter of the data service of the first user whose optimization is supported by the ADN device, from the service parameters of the data services subscribed to by the first user.

The policy server is any one of a policy and charging rules function PCRF network element, an online charging system OCS network element, and a Remote Authentication Dial In User Service server;

the sending policy request information to the policy server includes:
sending a policy request message to the policy server, where the policy request message carries the policy request information; or
sending a first request message to the policy server, where the first request message carries the policy request information; and
the receiving the application delivery policy sent by the policy server includes:
   receiving a policy response message sent by the policy server, where the policy response message carries the application delivery policy; or
   receiving a first response message sent by the policy server, where the first response message carries the application delivery policy.
   The policy server is any one of a PCRF network element, an OCS network element, and a Remote Authentication Dial In User Service server; and
   the receiving the subscription policy information sent by the policy server includes:
      receiving a subscription policy request message sent by the policy server, where the subscription policy request message carries the subscription policy information; or
      receiving a second request message sent by the policy server, where the second request message carries the subscription policy information.

The policy server is any one of a PCRF network element, an OCS network element, and a Remote Authentication Dial In User Service server; and
the receiving the subscription policy information forwarded by a gateway device includes:
   receiving a subscription policy message sent by the gateway device, where the subscription policy message carries the subscription policy information.

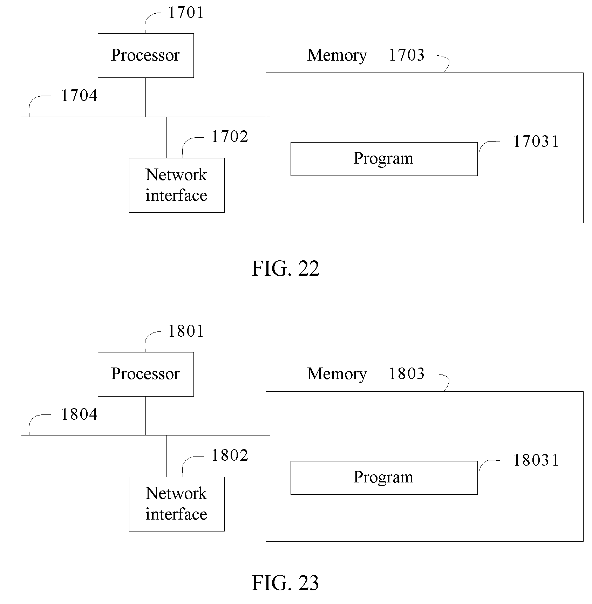

FIG. 22 shows a structure of a policy server according to another embodiment of the present invention, including at least one processor 1701 (for example, a CPU), at least one network interface 1702 or other communication interface, a memory 1703, and at least one communication bus 1704 configured to implement connection and communication between these apparatuses. The processor 1701 is configured to execute an executable module stored in the memory 1703, for example, a computer program. The memory 1703 may include a high-speed random access memory (RAM, Random Access Memory), and may further include a non-volatile memory (non-volatile memory), for example, at least one magnetic disk storage. By means of the at least one network interface 1702 (which may be wired or wireless), a communication connection is implemented between a system gateway of the browser and at least one other network element, and the Internet, a wide area network, a local network, a metropolitan area network, and the like may be used.

In some implementation manners, the memory 1703 stores a program 17031, where the program 17031 may be executed by the processor 1701. The program 17031 includes:
receiving policy request information sent by an ADN device, where the policy request information includes a user identity of a first user equipment and application payment functions supported by the ADN device, where the user identity of the first user equipment indicates that the first user equipment corresponds to the first user;
determining an application delivery policy according to the policy request information, where the application delivery policy includes at least one data service of the first user whose optimization is supported by the ADN device and a service parameter of the data service of the first user whose optimization is supported by the ADN device; and
sending the application delivery policy to the ADN device, so that the ADN device performs, according to the application delivery policy, service processing for a data service currently running in the first user equipment.

The determining an application delivery policy according to the policy request information includes:
obtaining subscription policy information from a policy database of the policy server according to the user identity of the first user equipment, where the subscription policy information includes data services subscribed to by the first user and service parameters of the data services subscribed to by the first user; and
determining the application delivery policy according to the subscription policy information and the application payment functions supported by the ADN device.

The determining the application delivery policy according to the subscription policy information and the application payment functions supported by the ADN device includes:
determining, according to the application payment functions supported by the ADN device, data services whose optimization is supported by the ADN device;
using a same data service in the data services subscribed to by the first user and the data services whose optimization is supported by the ADN device, as the data service of the first user whose optimization is supported by the ADN device; and
obtaining the service parameter of the data service of the first user whose optimization is supported by the ADN device, from the service parameters of the data services subscribed to by the first user.

The policy server is any one of a PCRF network element, an OCS network element, and a Remote Authentication Dial In User Service server.

The receiving policy request information sent by an ADN device includes:
receiving a policy request message sent by the ADN device, where the policy request message carries the policy request information; or
receiving a first request message sent by the ADN device, where the first request message carries the policy request information; and
the sending the application delivery policy to the ADN device includes:
   sending a policy response message to the ADN device, where the policy response message carries the application delivery policy; or
   sending a first response message to the ADN device, where the first response message carries the application delivery policy.

Generating subscription policy information, where the subscription policy information includes data services subscribed to by a first user equipment and service parameters of the data services subscribed to by the first user; and
sending the subscription policy information to an ADN device, so that the ADN device determines an application delivery policy according to the subscription policy information and application payment functions supported by the ADN device; or
sending the subscription policy information to a gateway device, so that the gateway device forwards the subscription policy information to the ADN device, so that the ADN device determines the application delivery policy according to the subscription policy information and the application payment functions supported by the ADN device.

The sending the subscription policy information to an ADN device includes:
sending a subscription policy request message to the ADN device, where the subscription policy request message carries the subscription policy information; or
sending a second request message to the ADN device, where the second request message carries the subscription policy information.

The sending the subscription policy information to a gateway device includes:
sending a subscription policy response message to the gateway device, where the subscription policy response message carries the subscription policy information.

FIG. 23 shows a structure of a gateway device according to another embodiment of the present invention, including at least one processor 1801 (for example, a CPU), at least one network interface 1802 or other communication interface, a memory 1803, and at least one communication bus 1804 configured to implement connection and communication between these apparatuses. The processor 1801 is configured to execute an executable module stored in the memory 1803, for example, a computer program. The memory 1803 may include a high-speed random access memory (RAM, Random Access Memory), and may further include a non-volatile memory (non-volatile memory), for example, at least one magnetic disk storage. By means of the at least one network interface 1802 (which may be wired or wireless), a communication connection is implemented between a system gateway of the browser and at least one other network element, and the Internet, a wide area network, a local network, a metropolitan area network, and the like may be used.

In some implementation manners, the memory 1803 stores a program 18031, where the program 18031 may be executed by the processor 1801. The program 18031 includes:
receiving subscription policy information sent by a policy server; and
forwarding the subscription policy information to an ADN device, so that the ADN device determines an application delivery policy according to the subscription policy information and application payment functions supported by the ADN device.

The receiving subscription policy information sent by a policy server includes:
receiving a subscription policy response message sent by the policy server, where the subscription policy response message carries the subscription policy information.

The forwarding the subscription policy information to an ADN device includes:
sending a subscription policy message to the ADN device, where the subscription policy message carries the subscription policy information.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

The first, second, and third are intended to distinguish different transmitters, and do not represent a sequence of the transmitters.

In the several embodiments provided in the present invention, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

A person of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

## Claims

1. A data processing method, comprising:
obtaining, by an application delivery networking ADN device, an application delivery policy, wherein the application delivery policy comprises at least one data service of a first user whose optimization is supported by the ADN device and comprises a service parameter of the data service of the first user whose optimization is supported by the ADN device; and
performing, by the ADN device according to the application delivery policy, service processing for a data service currently running in the first user equipment, wherein the first user equipment is a user equipment corresponding to the first user.

2. The data processing method according to claim 1, wherein:
the obtaining, by an ADN device, an application delivery policy comprises:
sending, by the ADN device, policy request information to the policy server, so that the policy server determines the application delivery policy according to the policy request information, wherein the policy request information comprises a user identity of the first user equipment and application payment functions supported by the ADN device, wherein the user identity of the first user equipment indicates that the first user equipment corresponds to the first user; and
receiving, by the ADN device, the application delivery policy sent by the policy server.

3. The data processing method according to claim 1, wherein:
the obtaining, by an ADN device, an application delivery policy comprises:
obtaining, by the ADN device, subscription policy information, wherein the subscription policy information is generated by a policy server, and the subscription policy information comprises data services subscribed to by the first user and service parameters of the data services subscribed to by the first user; and
determining, by the ADN device, the application delivery policy according to the subscription policy information and application payment functions supported by the ADN device.

4. The data processing method according to claim 3, wherein:
the obtaining, by the ADN device, subscription policy information comprises:
receiving, by the ADN device, the subscription policy information sent by the policy server; or
receiving, by the ADN device, the subscription policy information forwarded by a gateway device, wherein the subscription policy information is generated by the policy server and sent to the gateway device, and the gateway device is any one of a gateway general packet radio service support node GGSN network element, a packet data network gateway PGW network element, and a packet data serving node PDSN network element.

5. The data processing method according to claim 3 or 4, wherein the determining, by the ADN device, the application delivery policy according to the subscription policy information and application payment functions supported by the ADN device comprises:
determining, by the ADN device according to the application payment functions supported by the ADN device, data services whose optimization is supported by the ADN device;
using, by the ADN device, a same data service in the data services subscribed to by the first user and the data services whose optimization is supported by the ADN device, as the data service of the first user whose optimization is supported by the ADN device; and
obtaining, by the ADN device, the service parameter of the data service of the first user whose optimization is supported by the ADN device, from the service parameters of the data services subscribed to by the first user.

6. The data processing method according to claim 2, wherein: the policy server is any one of a policy and charging rules function PCRF network element, an online charging system OCS network element, and a Remote Authentication Dial In User Service server;
the sending, by the ADN device, policy request information to the policy server comprises:
sending, by the ADN device, a policy request message to the policy server, wherein the policy request message carries the policy request information; or
sending, by the ADN device, a first request message to the policy server, wherein the first request message carries the policy request information; and
the receiving, by the ADN device, the application delivery policy sent by the policy server comprises:
receiving, by the ADN device, a policy response message sent by the policy server, wherein the policy response message carries the application delivery policy; or
receiving, by the ADN device, a first response message sent by the policy server, wherein the first response message carries the application delivery policy.

7. The data processing method according to claim 4, wherein: the policy server is any one of a PCRF network element, an OCS network element, and a Remote Authentication Dial In User Service server; and
the receiving, by the ADN device, the subscription policy information sent by the policy server comprises:
receiving, by the ADN device, a subscription policy request message sent by the policy server, wherein the subscription policy request message carries the subscription policy information; or
receiving, by the ADN device, a second request message sent by the policy server, wherein the second request message carries the subscription policy information.

8. The data processing method according to claim 4, wherein: the policy server is any one of a PCRF network element, an OCS network element, and a Remote Authentication Dial In User Service server; and
the receiving, by the ADN device, the subscription policy information forwarded by a gateway device comprises:
receiving, by the ADN device, a subscription policy message sent by the gateway device, wherein the subscription policy message carries the subscription policy information.

9. A data processing method, comprising:
receiving, by a policy server, policy request information sent by an ADN device, wherein the policy request information comprises a user identity of a first user equipment and application payment functions supported by the ADN device, wherein the user identity of the first user equipment indicates that the first user equipment corresponds to the first user;
determining, by the policy server, an application delivery policy according to the policy request information, wherein the application delivery policy comprises at least one data service of the first user whose optimization is supported by the ADN device and comprises a service parameter of the data service of the first user whose optimization is supported by the ADN device; and
sending, by the policy server, the application delivery policy to the ADN device, so that the ADN device performs, according to the application delivery policy, service processing for a data service currently running in the first user equipment.

10. The data processing method according to claim 9, wherein the determining, by the policy server, an application delivery policy according to the policy request information comprises:
obtaining, by the policy server, subscription policy information from a policy database of the policy server according to the user identity of the first user equipment, wherein the subscription policy information comprises data services subscribed to by the first user and service parameters of the data services subscribed to by the first user; and
determining, by the policy server, the application delivery policy according to the subscription policy information and the application payment functions supported by the ADN device.

11. The data processing method according to claim 10, wherein:
the determining, by the policy server, the application delivery policy according to the subscription policy information and the application payment functions supported by the ADN device comprises:
determining, by the policy server according to the application payment functions supported by the ADN device, data services whose optimization is supported by the ADN device;
using, by the policy server, a same data service in the data services subscribed to by the first user and the data services whose optimization is supported by the ADN device, as the data service of the first user whose optimization is supported by the ADN device; and
obtaining, by the policy server, the service parameter of the data service of the first user whose optimization is supported by the ADN device, from the service parameters of the data services subscribed to by the first user.

12. The data processing method according to any one of claims 9 to 11, wherein: the policy server is any one of a PCRF network element, an OCS network element, and a Remote Authentication Dial In User Service server;
the receiving, by a policy server, policy request information sent by an ADN device comprises:
receiving, by the policy server, a policy request message sent by the ADN device, wherein the policy request message carries the policy request information; or
receiving, by the policy server, a first request message sent by the ADN device, wherein the first request message carries the policy request information; and
the sending, by the policy server, the application delivery policy to the ADN device comprises:
sending, by the policy server, a policy response message to the ADN device, wherein the policy response message carries the application delivery policy; or
sending, by the policy server, a first response message to the ADN device, wherein the first response message carries the application delivery policy.

13. A data processing method, comprising:
generating, by a policy server, subscription policy information, wherein the subscription policy information comprises data services subscribed to by a first user equipment and service parameters of the data services subscribed to by the first user; and
sending, by the policy server, the subscription policy information to an ADN device, so that the ADN device determines an application delivery policy according to the subscription policy information and application payment functions supported by the ADN device; or
sending, by the policy server, the subscription policy information to a gateway device, so that the gateway device forwards the subscription policy information to the ADN device, so that the ADN device determines the application delivery policy according to the subscription policy information and the application payment functions supported by the ADN device.

14. The data processing method according to claim 13, wherein:
the sending, by the policy server, the subscription policy information to an ADN device comprises:
sending, by the policy server, a subscription policy request message to the ADN device, wherein the subscription policy request message carries the subscription policy information; or
sending, by the policy server, a second request message to the ADN device, wherein the second request message carries the subscription policy information.

15. The data processing method according to claim 13, wherein:
the sending, by the policy server, the subscription policy information to a gateway device comprises:
sending, by the policy server, a subscription policy response message to the gateway device, wherein the subscription policy response message carries the subscription policy information.

16. A data processing method, comprising:
receiving, by a gateway device, subscription policy information sent by a policy server; and
forwarding, by the gateway device, the subscription policy information to an ADN device, so that the ADN device determines an application delivery policy according to the subscription policy information and application payment functions supported by the ADN device.

17. The data processing method according to claim 16, wherein:
the receiving, by a gateway device, subscription policy information sent by a policy server comprises:
receiving, by the gateway device, a subscription policy response message sent by the policy server, wherein the subscription policy response message carries the subscription policy information.

18. The data processing method according to claim 16, wherein:
the forwarding, by the gateway device, the subscription policy information to an ADN device comprises:
sending, by the gateway device, a subscription policy message to the ADN device, wherein the subscription policy message carries the subscription policy information.

19. An ADN device, comprising:
a first obtaining unit, configured to obtain an application delivery policy, wherein the application delivery policy comprises at least one data service of a first user whose optimization is supported by the ADN device and comprises a service parameter of the data service of the first user whose optimization is supported by the ADN device; and
a first processing unit, configured to perform, according to the application delivery policy, service processing for a data service currently running in the first user equipment, wherein the first user equipment is a user equipment corresponding to the first user.

20. The ADN device according to claim 19, wherein:
the first obtaining unit comprises:
a first sending subunit, configured to send policy request information to the policy server, so that the policy server determines the application delivery policy according to the policy request information, wherein the policy request information comprises a user identity of the first user equipment and application payment functions supported by the ADN device, wherein the user identity of the first user equipment indicates that the first user equipment corresponds to the first user; and
a first receiving subunit, configured to receive the application delivery policy sent by the policy server.

21. The ADN device according to claim 19, wherein:
the first obtaining unit further comprises:
a first obtaining subunit, configured to obtain subscription policy information, wherein the subscription policy information is generated by a policy server, and the subscription policy information comprises data services subscribed to by the first user and service parameters of the data services subscribed to by the first user; and
a first processing subunit, configured to determine the application delivery policy according to the subscription policy information and application payment functions supported by the ADN device.

22. The ADN device according to claim 21, wherein:
the first obtaining subunit is specifically configured to:
receive the subscription policy information sent by the policy server; or
receive the subscription policy information forwarded by a gateway device, wherein the subscription policy information is generated by the policy server and sent to the gateway device, and the gateway device is any one of a gateway general packet radio service support node GGSN network element, a packet data network gateway PGW network element, and a packet data serving node PDSN network element.

23. The ADN device according to claim 21 or 22, wherein:
the first processing subunit is specifically configured to:
determine, according to the application payment functions supported by the ADN device, data services whose optimization is supported by the ADN device;
use a same data service in the data services subscribed to by the first user and the data services whose optimization is supported by the ADN device, as the data service of the first user whose optimization is supported by the ADN device; and
obtain the service parameter of the data service of the first user whose optimization is supported by the ADN device, from the service parameters of the data services subscribed to by the first user.

24. The ADN device according to claim 20, wherein: the policy server is any one of a policy and charging rules function PCRF network element, an online charging system OCS network element, and a Remote Authentication Dial In User Service server;
the first sending subunit is specifically configured to:
send a policy request message to the policy server, wherein the policy request message carries the policy request information; or
send a first request message to the policy server, wherein the first request message carries the policy request information; and
the first receiving subunit is specifically configured to:
receive a policy response message sent by the policy server, wherein the policy response message carries the application delivery policy; or
receive a first response message sent by the policy server, wherein the first response message carries the application delivery policy.

25. The ADN device according to claim 22, wherein: the policy server is any one of a PCRF network element, an OCS network element, and a Remote Authentication Dial In User Service server; and
the first obtaining subunit is specifically configured to:
receive a subscription policy request message sent by the policy server, wherein the subscription policy request message carries the subscription policy information; or
receive a second request message sent by the policy server, wherein the second request message carries the subscription policy information.

26. The ADN device according to claim 22, wherein: the policy server is any one of a PCRF network element, an OCS network element, and a Remote Authentication Dial In User Service server; and
the first obtaining subunit is specifically configured to:
receive a subscription policy message sent by the gateway device, wherein the subscription policy message carries the subscription policy information.

27. A policy server, comprising:
a first receiving unit, configured to receive policy request information sent by an ADN device, wherein the policy request information comprises a user identity of a first user equipment and application payment functions supported by the ADN device, wherein the user identity of the first user equipment indicates that the first user equipment corresponds to the first user;
a second processing unit, configured to determine an application delivery policy according to the policy request information, wherein the application delivery policy comprises at least one data service of the first user whose optimization is supported by the ADN device and comprises a service parameter of the data service of the first user whose optimization is supported by the ADN device; and
a first sending unit, configured to send the application delivery policy to the ADN device, so that the ADN device performs, according to the application delivery policy, service processing for a data service currently running in the first user equipment.

28. The policy server according to claim 27, wherein the second processing unit comprises:
a querying subunit, configured to obtain subscription policy information from a policy database of the policy server according to the user identity of the first user equipment, wherein the subscription policy information comprises data services subscribed to by the first user and service parameters of the data services subscribed to by the first user; and
a determining subunit, configured to determine the application delivery policy according to the subscription policy information and the application payment functions supported by the ADN device.

29. The policy server according to claim 28, wherein:
the determining subunit is specifically configured to:
determine, according to the application payment functions supported by the ADN device, data services whose optimization is supported by the ADN device;
use a same data service in the data services subscribed to by the first user and the data services whose optimization is supported by the ADN device, as the data service of the first user whose optimization is supported by the ADN device; and
obtain the service parameter of the data service of the first user whose optimization is supported by the ADN device, from the service parameters of the data services subscribed to by the first user.

30. The policy server according to any one of claims 27 to 29, wherein: the policy server is any one of a PCRF network element, an OCS network element, and a Remote Authentication Dial In User Service server;
the first receiving unit is specifically configured to:
receive a policy request message sent by the ADN device, wherein the policy request message carries the policy request information; or
receive a first request message sent by the ADN device, wherein the first request message carries the policy request information; and
the first sending unit is specifically configured to:
send a policy response message to the ADN device, wherein the policy response message carries the application delivery policy; or
send a first response message to the ADN device, wherein the first response message carries the application delivery policy.

31. A policy server provided by an embodiment of the present invention, comprising:
a generating unit, configured to generate subscription policy information, wherein the subscription policy information comprises data services subscribed to by a first user equipment and service parameters of the data services subscribed to by the first user; and
a second sending unit, configured to send the subscription policy information to an ADN device, so that the ADN device determines an application delivery policy according to the subscription policy information and application payment functions supported by the ADN device, or send the subscription policy information to a gateway device, so that the gateway device forwards the subscription policy information to the ADN device, so that the ADN device determines the application delivery policy according to the subscription policy information and the application payment functions supported by the ADN device.

32. The policy server according to claim 31, wherein:
the second sending unit is specifically configured to:
send a subscription policy request message to the ADN device, wherein the subscription policy request message carries the subscription policy information; or
send a second request message to the ADN device, wherein the second request message carries the subscription policy information.

33. The policy server according to claim 31, wherein:
the second sending unit is further configured to:
send a subscription policy response message to the gateway device, wherein the subscription policy response message carries the subscription policy information.

34. A gateway device provided by an embodiment of the present invention, comprising:
a third receiving unit, configured to receive subscription policy information sent by a policy server; and
a third sending unit, configured to forward the subscription policy information to an ADN device, so that the ADN device determines an application delivery policy according to the subscription policy information and application payment functions supported by the ADN device.

35. The gateway device according to claim 34, wherein:
the third receiving unit is specifically configured to receive a subscription policy response message sent by the policy server, wherein the subscription policy response message carries the subscription policy information.

36. The gateway device according to claim 34, wherein:
the third sending unit is specifically configured to send a subscription policy message to the ADN device, wherein the subscription policy message carries the subscription policy information.

37. A communication system provided by an embodiment of the present invention, comprising:
the ADN device according to any one of claims 19 to 26;
the policy server according to any one of claims 27 to 33; and
the gateway device according to any one of claims 34 to 36.

38. An ADN device provided by an embodiment of the present invention, comprising:
a processor, configured to obtain an application delivery policy, wherein the application delivery policy comprises at least one data service of a first user whose optimization is supported by the ADN device and comprises a service parameter of the data service of the first user whose optimization is supported by the ADN device, wherein
the processor is further configured to perform, according to the application delivery policy, service processing for a data service currently running in the first user equipment, wherein the first user equipment is a user equipment corresponding to the first user.

39. The ADN device according to claim 38, wherein the ADN device further comprises:
a first transmitter, configured to send policy request information to the policy server, so that the policy server determines the application delivery policy according to the policy request information, wherein the policy request information comprises a user identity of the first user equipment and application payment functions supported by the ADN device, wherein the user identity of the first user equipment indicates that the first user equipment corresponds to the first user; and
a first receiver, configured to receive the application delivery policy sent by the policy server.

40. The ADN device according to claim 38, wherein:
the processor is further configured to: obtain subscription policy information, wherein the subscription policy information is generated by a policy server, and the subscription policy information comprises data services subscribed to by the first user and service parameters of the data services subscribed to by the first user; and
determine the application delivery policy according to the subscription policy information and application payment functions supported by the ADN device.

41. The ADN device according to claim 40, wherein the ADN device further comprises:
a second receiver, configured to:
receive the subscription policy information sent by the policy server; or
receive the subscription policy information forwarded by a gateway device, wherein the subscription policy information is generated by the policy server and sent to the gateway device, and the gateway device is any one of a gateway general packet radio service support node GGSN network element, a packet data network gateway PGW network element, and a packet data serving node PDSN network element.

42. The ADN device according to claim 40 or 41, wherein:
the processor is specifically configured to:
determine, according to the application payment functions supported by the ADN device, data services whose optimization is supported by the ADN device;
use a same data service in the data services subscribed to by the first user and the data services whose optimization is supported by the ADN device, as the data service of the first user whose optimization is supported by the ADN device; and
obtain the service parameter of the data service of the first user whose optimization is supported by the ADN device, from the service parameters of the data services subscribed to by the first user.

43. The ADN device according to claim 39, wherein: the policy server is any one of a policy and charging rules function PCRF network element, an online charging system OCS network element, and a Remote Authentication Dial In User Service server;
the first transmitter is specifically configured to:
send a policy request message to the policy server, wherein the policy request message carries the policy request information; or
send a first request message to the policy server, wherein the first request message carries the policy request information; and
the first receiver is specifically configured to:
receive a policy response message sent by the policy server, wherein the policy response message carries the application delivery policy; or
receive a first response message sent by the policy server, wherein the first response message carries the application delivery policy.

44. The ADN device according to claim 41, wherein: the policy server is any one of a PCRF network element, an OCS network element, and a Remote Authentication Dial In User Service server; and
the second receiver is specifically configured to:
receive a subscription policy request message sent by the policy server, wherein the subscription policy request message carries the subscription policy information; or
receive a second request message sent by the policy server, wherein the second request message carries the subscription policy information.

45. The ADN device according to claim 41, wherein: the policy server is any one of a PCRF network element, an OCS network element, and a Remote Authentication Dial In User Service server; and
the second receiver is specifically configured to:
receive a subscription policy message sent by the gateway device, wherein the subscription policy message carries the subscription policy information.

46. A policy server provided by an embodiment of the present invention, comprising:
a receiver, configured to receive policy request information sent by an ADN device, wherein the policy request information comprises a user identity of a first user equipment and application payment functions supported by the ADN device, wherein the user identity of the first user equipment indicates that the first user equipment corresponds to the first user;
a processor, configured to determine an application delivery policy according to the policy request information, wherein the application delivery policy comprises at least one data service of the first user whose optimization is supported by the ADN device and comprises a service parameter of the data service of the first user whose optimization is supported by the ADN device; and
a transmitter, configured to send the application delivery policy to the ADN device, so that the ADN device performs, according to the application delivery policy, service processing for a data service currently running in the first user equipment.

47. The policy server according to claim 46, wherein the processor is configured to:
obtain subscription policy information from a policy database of the policy server according to the user identity of the first user equipment, wherein the subscription policy information comprises data services subscribed to by the first user and service parameters of the data services subscribed to by the first user; and
determine the application delivery policy according to the subscription policy information and the application payment functions supported by the ADN device.

48. The policy server according to claim 47, wherein:
the processor is specifically configured to:
determine, according to the application payment functions supported by the ADN device, data services whose optimization is supported by the ADN device;
use a same data service in the data services subscribed to by the first user and the data services whose optimization is supported by the ADN device, as the data service of the first user whose optimization is supported by the ADN device; and
obtain the service parameter of the data service of the first user whose optimization is supported by the ADN device, from the service parameters of the data services subscribed to by the first user.

49. The policy server according to any one of claims 46 to 48, wherein: the policy server is any one of a PCRF network element, an OCS network element, and a Remote Authentication Dial In User Service server;
the receiver is configured to:
receive a policy request message sent by the ADN device, wherein the policy request message carries the policy request information; or
receive a first request message sent by the ADN device, wherein the first request message carries the policy request information; and
the transmitter is specifically configured to:
send a policy response message to the ADN device, wherein the policy response message carries the application delivery policy; or
send a first response message to the ADN device, wherein the first response message carries the application delivery policy.

50. A policy server provided by an embodiment of the present invention, comprising:
a processor, configured to generate subscription policy information, wherein the subscription policy information comprises data services subscribed to by a first user equipment and service parameters of the data services subscribed to by the first user; and
a transmitter, configured to send the subscription policy information to an ADN device, so that the ADN device determines an application delivery policy according to the subscription policy information and application payment functions supported by the ADN device, or send the subscription policy information to a gateway device, so that the gateway device forwards the subscription policy information to the ADN device, so that the ADN device determines the application delivery policy according to the subscription policy information and the application payment functions supported by the ADN device.

51. The policy server according to claim 50, wherein:
the transmitter is specifically configured to:
send a subscription policy request message to the ADN device, wherein the subscription policy request message carries the subscription policy information; or
send a second request message to the ADN device, wherein the second request message carries the subscription policy information.

52. The policy server according to claim 50, wherein:
the transmitter is further configured to:
send a subscription policy response message to the gateway device, wherein the subscription policy response message carries the subscription policy information.

53. A gateway device provided by an embodiment of the present invention, comprising:
a receiver, configured to receive subscription policy information sent by a policy server; and
a transmitter, configured to forward the subscription policy information to an ADN device, so that the ADN device determines an application delivery policy according to the subscription policy information and application payment functions supported by the ADN device.

54. The gateway device according to claim 53, wherein:
the receiver is specifically configured to:
receive a subscription policy response message sent by the policy server, wherein the subscription policy response message carries the subscription policy information.

55. The gateway device according to claim 53, wherein:
the transmitter is specifically configured to:
send a subscription policy message to the ADN device, wherein the subscription policy message carries the subscription policy information.

56. A communication system provided by an embodiment of the present invention, comprising:
the ADN device according to any one of claims 38 to 45;
the policy server according to any one of claims 46 to 52; and
the gateway device according to any one of claims 53 to 55.
